# EUROPÄISCHE PATENTSCHRIFT

(11) **EP 3 695 475 B1**
(45) Veröffentlichungstag und Bekanntmachung des Hinweises auf die Patenterteilung: **14.04.2021**
(21) Anmeldenummer: 18804580.1
(22) Anmeldetag: 15.11.2018
(51) Int. Cl.: H02H 1/06, H04L 12/40, H04L 12/10, H02H 3/00

(54) **SICHERUNGSMODUL UND FELDBUSSYSTEM MIT SICHERUNGSMODUL**
CIRCUIT-BREAKER MODULE AND FIELD BUS SYSTEM COMPRISING A CIRCUIT-BREAKER MODULE
MODULE DE PROTECTION ET SYSTÈME DE BUS DE TERRAIN AVEC MODULE DE PROTECTION

(30) Priorität: 27.11.2017 DE 102017127983
(43) Veröffentlichungstag der Anmeldung: 19.08.2020
(73) Patentinhaber: Beckhoff Automation GmbH, 33415 Verl (DE)
(72) Erfinder: WALTHER, Lars, 33818 Leopoldshöhe (DE); HEIDENHÖFER, Jens, 33415 Verl (DE); JOST, Michael, 32694 Dörentrup (DE); PRÜSSMEIER, Uwe, 32657 Lemgo (DE); JÜRGENHAKE, Christian, 33397 Rietberg (DE)
(74) Vertreter: Patentanwaltskanzlei WILHELM & BECK
(86) Internationale Anmeldenummer: PCT/EP2018/081431
(87) Internationale Veröffentlichungsnummer: WO 2019/101626

(56) Entgegenhaltungen:
- EP-A1- 1 055 991
- DE-B3-102015 116 800
- DE-C1- 10 031 964
- US-A1- 2007 213 854

## Beschreibung

Die vorliegende Erfindung betrifft ein Sicherungsmodul und ein Feldbussystem mit einem Sicherungsmodul.

Diese Patentanmeldung beansprucht die Priorität der deutschen Patentanmeldung DE 10 2017 127 983.0. Aus dem Stand der Technik sind Schutzvorrichtungen zum Schutz von Verbrauchern und elektrischen Leitungen bekannt. Verbraucher und elektrische Leitungen können beispielsweise vor einem unzulässig hohen elektrischen Strom geschützt werden. Ein zu hoher elektrischer Strom, der einen Nennstrom eines Verbrauchers derart übersteigt, dass Folgeschäden am Verbraucher zu befürchten sind, kann beispielsweise bei einem Kurzschluss auftreten. Zulässige elektrische Ströme können beispielsweise durch Normen, z.B. DIN VDE 0298-4:2013-06, festgelegt sein.

Aus der Offenlegungsschrift DE 10 2006 025 605 A1 ist eine Vorrichtung zum selbsttätigen Abschalten oder Schalten eines elektrischen Verbrauchers bekannt. Die Vorrichtung weist eine Steuereinheit auf, die mit einem elektronischen Stellelement verbunden ist. Die Steuereinheit ist dazu ausgebildet, den elektrischen Verbraucher anhand einer Auslösecharakteristik abzuschalten. Die Steuereinheit und der Verbraucher können durch eine gemeinsame Versorgungsspannung betrieben werden. Für einen Notbetrieb der Steuereinheit bei einem Ausfall der Versorgungsspannung kann die Vorrichtung einen Energiespeicher aufweisen, der durch die Versorgungsspannung aufgeladen werden kann.

Ein Nachteil der in der DE 10 2006 025 605 A1 offenbarten Vorrichtung besteht darin, dass der Energiespeicher als zusätzliches Element in der Vorrichtung angeordnet werden muss. Dies erfordert einen zusätzlichen Installationsaufwand.

Aus DE 10 2015 116800 B3 ist ein Sicherungsmodul mit den Merkmalen des Obergriffs des Anspruch 1 bekannt. Weitere Stand der Technik ist in der EP 1 055 991 A1, DE 100 31 964 C1 und der US 2007/213854 A1 offenbart.

Die Aufgabe der vorliegenden Erfindung besteht darin, ein verbessertes Sicherungsmodul und ein Feldbussystem mit einem verbesserten Sicherungsmodul bereitzustellen.

Diese Aufgaben werden durch ein Sicherungsmodul mit den Merkmalen des Anspruchs 1 und durch ein Feldbussystem mit einem Sicherungsmodul mit den Merkmalen des Anspruchs 13 gelöst. In den abhängigen Ansprüchen sind vorteilhafte Weiterbildungen angegeben.

Ein Sicherungsmodul, welches allgemein auch als Schutzvorrichtung oder Überstromschutzmodul bezeichnet werden kann, für ein Feldbussystem weist eine Anschalteinheit, eine Steuereinheit, einen zum Einspeisen einer Versorgungsenergie in das Sicherungsmodul ausgebildeten Versorgungseingang, einen zum Weiterleiten der Versorgungsenergie als eine abgesicherte Versorgungsenergie an einen Verbraucher ausgebildeten ersten Versorgungsausgang, ein zum elektrischen Verbinden oder zum elektrischen Trennen des Versorgungseingangs und des ersten Versorgungsausgangs ausgebildetes erstes Schaltelement und ein zur Bereitstellung einer Betriebsenergie über eine Betriebsenergieversorgungsleitung für einen Betrieb der Steuereinheit ausgebildetes Versorgungsmodul auf. Das Versorgungsmodul ist mittels einer Versorgungsleitung und einer Versorgungsanbindungsleitung mit dem Versorgungseingang und mittels einer Feldbusenergieleitung und einer Feldbusenergieanbindungsleitung mit einem Feldbusenergieeingang elektrisch verbunden. Der Feldbusenergieeingang ist zum Einspeisen einer Feldbusenergie in das Sicherungsmodul zum Betrieb der Anschalteinheit ausgebildet. Das Versorgungsmodul ist dazu ausgebildet, die Betriebsenergie entweder aus der Versorgungsenergie oder aus der Feldbusenergie zu generieren. Die Anschalteinheit ist über eine Datenleitung mit der Steuereinheit verbunden und zur Anbindung des Sicherungsmoduls an einen Feldbusteilnehmer mittels eines Feldbusses ausgebildet, wodurch ein Austausch von Feldbusdaten zwischen der Steuereinheit und dem Feldbusteilnehmer ermöglicht wird. Die Steuereinheit ist mit dem ersten Schaltelement verbunden und dazu ausgebildet, das Weiterleiten der Versorgungsenergie als abgesicherte Versorgungsenergie über den ersten Versorgungsausgang durch ein Ansteuern des ersten Schaltelements abzusichern.

Vorteilhafterweise ermöglicht es das Versorgungsmodul, dass der Steuereinheit die Betriebsenergie bereitgestellt werden kann, falls entweder die Versorgungsenergie oder die Feldbusenergie ausfällt oder die Versorgungsenergie oder die Feldbusenergie außerhalb eines vorgegebenen Versorgungsenergiewertebereichs oder außerhalb eines vorgegebenen Feldbusenergiewertebereichs liegt, sodass die Erzeugung der Betriebsenergie nicht möglich ist. Das Versorgungsmodul ist mittels einer Betriebsenergieleitung elektrisch mit der Steuereinheit verbunden, um die Steuereinheit mit der generierten Betriebsenergie zu versorgen.

Vorteilhafterweise ist das Sicherungsmodul auch dazu ausgebildet, den Verbraucher beispielsweise vor einem zu hohen elektrischen Strom abzusichern. Ein weiterer Vorteil besteht darin, dass das Sicherungsmodul mittels des Feldbusses mit einem Feldbusteilnehmer des Feldbussystems verbunden werden kann. Der Feldbusteilnehmer kann als Steuerung des Feldbussystems ausgebildet sein. Auch kann es sich bei dem Feldbusteilnehmer um einen Master bzw. Feldbusmaster des Feldbussystems handeln. Ebenso kann der Feldbusteilnehmer ein oder eine Mehrzahl beliebiger anderer Teilnehmer, wie beispielsweise Feldbuskoppler und/oder Feldbusklemmen, welche auch als Busklemmen bezeichnet werden können, im Feldbussystem sein. Das Sicherungsmodul kann somit selber ein Feldbusteilnehmer sein und dadurch wie ein gewöhnlicher Teilnehmer des Feldbussystems angesprochen werden. Eine externe Verkabelung zum Anschluss des Sicherungsmoduls an das Feldbussystem entfällt damit. Ein weiterer Vorteil besteht darin, dass das Sicherungsmodul bei Anlegen der Versorgungsenergie schon eine Absicherungsfunktion erfüllt, auch wenn der Feldbus unterbrochen oder noch nicht betriebsbereit ist.

In einer Ausführungsform ist das Versorgungsmodul dazu ausgebildet, die Betriebsenergie aus der Feldbusenergie zu generieren, falls die Versorgungsenergie außerhalb eines vorgegebenen Versorgungsenergiewertebereichs liegt. Vorteilhafterweise wird der Feldbus nicht gestört oder unterbrochen, wenn die Versorgungsenergie nicht zur Bereitstellung der Betriebsenergie für die Steuereinheit verwendet werden kann. Zwar ist beispielsweise eine Überstromschutzfunktion des Sicherungsmoduls nicht gegeben, wenn die Versorgungsenergie außerhalb des vorgegebenen Versorgungsenergiewertebereichs liegt. Dennoch muss die Steuereinheit weiterhin mit der aus der Feldbusenergie generierten Betriebsenergie versorgt werden, damit die Anschalteinheit weiterhin Feldbusdaten von der Steuereinheit empfangen kann. Auf diese Weise ist sichergestellt, dass der Feldbus nicht gestört oder unterbrochen wird. Es ist jedoch auch möglich, dass das Versorgungsmodul dazu ausgebildet ist, die Betriebsenergie aus der Versorgungsenergie zu generieren, falls die Feldbusenergie außerhalb eines vorgegebenen Versorgungsenergiewertebereichs liegt. In diesem Fall wird also die Feldbusenergie primär zur Generierung der Betriebsenergie verwendet, während die Versorgungsenergie als Alternative zur Generierung der Betriebsenergie verwendet werden kann.

In einer Ausführungsform ist die Steuereinheit dazu ausgebildet, im Rahmen der Absicherung des ersten Versorgungsausgangs einen Parameter der Versorgungsenergie und/oder einen Parameter der abgesicherten Versorgungsenergie mittels einer mit der Steuereinheit verbundenen ersten Erfassungseinrichtung zu überwachen. Die Steuereinheit ist dazu ausgebildet, den Versorgungseingang und den ersten Versorgungsausgang im Rahmen der Absicherung mittels des ersten Schaltelements elektrisch voneinander zu trennen, sobald der überwachte Parameter außerhalb eines vorgegebenen Wertebereichs liegt.

Vorteilhafterweise wird der Verbraucher durch das elektrische Trennen des Versorgungseingangs und des ersten Versorgungsausgangs abgesichert, wenn der überwachte Parameter außerhalb eines vorgegebenen Wertebereichs liegt. Der Parameter der Versorgungsenergie und/oder der Parameter der abgesicherten Versorgungsenergie kann beispielsweise ein elektrischer Strom, eine elektrische Spannung, eine zeitlichen Entwicklung des elektrischen Stroms oder der elektrischen Spannung oder eine Zeitdauer, innerhalb derer ein elektrischer Strom begrenzt werden soll, sein. Beispielsweise kann der Parameter der Versorgungsenergie und/oder der Parameter der abgesicherten Versorgungsenergie auch eine Kombination aus dem elektrischen Strom mit der elektrischen Spannung und/oder eine Kombination aus einer zeitlichen Entwicklung des elektrischen Stroms und der elektrischen Spannung und/oder eine Kombination aus einem elektrischen Strom mit einer Zeitdauer, innerhalb derer ein elektrischer Strom begrenzt werden soll, und/oder eine Kombination aus einer elektrischen Spannung mit einer Zeitdauer, innerhalb derer ein elektrischer Strom begrenzt werden soll, sein.

In einer Ausführungsform ist die Steuereinheit dazu ausgebildet, eine die Absicherung des ersten Versorgungsausgangs betreffende Information mittels der Feldbusdaten über die Anschalteinheit mit dem Feldbusteilnehmer auszutauschen.

In einer Ausführungsform ist die Steuereinheit dazu ausgebildet ist, die die Absicherung betreffende Information an den Feldbusteilnehmer zu übermitteln. Die die Absicherung des ersten Versorgungsausgangs betreffende Information ist eine von der ersten Erfassungseinrichtung erfasste elektrische Spannung, ein erfasster elektrischer Strom, eine erfasste zeitliche Entwicklung der elektrischen Spannung oder des elektrischen Stroms, ein erfasster Schaltzustand des ersten Schaltelements oder eine von der Steuereinheit überwachte Zeitdauer, innerhalb derer das erste Schaltelement einen elektrischen Strom begrenzt. Vorteilhafterweise kann dadurch eine Zustandsüberwachung des Sicherungsmoduls erfolgen.

In einer Ausführungsform ist die Steuereinheit dazu ausgebildet, die die Absicherung betreffende Information von dem Feldbusteilnehmer zu empfangen. Die die Absicherung des ersten Versorgungsausgangs betreffende Information ist ein vorgegebener Wertebereich einer elektrischen Spannung, eines elektrischen Stroms, einer zeitlichen Entwicklung der elektrischen Spannung oder des elektrischen Stroms oder einer Zeitdauer, innerhalb derer das erste Schaltelement einen elektrischen Strom begrenzt. Vorteilhafterweise kann die Steuereinheit die die Absicherung betreffende Information verwenden, um den ersten Versorgungsausgang abzusichern.

In einer Ausführungsform weist das Sicherungsmodul eine erste Isolationsvorrichtung auf. Die erste Isolationsvorrichtung ist in der Feldbusenergieanbindungsleitung geschaltet. Dadurch weist die Feldbusenergieanbindungsleitung einen ersten Abschnitt und einen zweiten Abschnitt auf. Die erste Isolationsvorrichtung ist dazu ausgebildet, den ersten Abschnitt und den zweiten Abschnitt der Feldbusenergieanbindungsleitung galvanisch voneinander zu trennen.

In einer Ausführungsform weist das Sicherungsmodul eine zweite Isolationsvorrichtung auf. Die zweite Isolationsvorrichtung ist in der Datenleitung geschaltet. Dadurch weist die Datenleitung einen ersten Abschnitt und einen zweiten Abschnitt auf. Die zweite Isolationsvorrichtung ist dazu ausgebildet, den ersten Abschnitt und den zweiten Abschnitt der Datenleitung galvanisch voneinander zu trennen. Vorteilhafterweise sind durch eine galvanische Trennung des ersten und des zweiten Abschnitts der Feldbusenergieanbindungsleitung und durch eine galvanische Trennung des ersten und des zweiten Abschnitts der Datenleitung die Versorgungsleitung und die Feldbusenergieleitung galvanisch voneinander getrennt. Somit wird die Energieversorgung galvanisch getrennt. Dadurch kann eine Übertragung von Störsignalen zwischen der Versorgungsenergieleitung und der Feldbusenergieleitung vermieden werden. Insbesondere ist dadurch auch die Feldbusenergieleitung von der Betriebsenergieleitung galvanisch getrennt, wodurch eine Übertragung von Störsignalen zwischen der Feldbusenergieleitung und der Betriebsenergieleitung vermieden werden kann. Ebenfalls galvanisch voneinander getrennt sind die Versorgungsenergieleitung und ein Kommunikationskanal des Feldbusses. Damit kann auch eine Übertragung von Störsignalen zwischen der Versorgungsenergieleitung und dem Kommunikationskanal, über den ein Austausch von Feldbusdaten erfolgen kann, vermieden werden. Insgesamt sind also die Versorgungsenergieleitung und der Feldbus galvanisch voneinander getrennt.

In einer Ausführungsform weist das Sicherungsmodul einen zum Weiterleiten der abgesicherten Versorgungsenergie an einen weiteren Verbraucher ausgebildeten zweiten Versorgungsausgang und ein zum elektrischen Verbinden oder zum elektrischen Trennen des Versorgungseingangs und des zweiten Versorgungsausgangs ausgebildetes zweites Schaltelement auf. Das zweite Schaltelement ist mit der Steuereinheit verbunden. Das erste Schaltelement und das zweite Schaltelement sind unabhängig voneinander von der Steuereinheit ansteuerbar. Die Steuereinheit ist dazu ausgebildet, das Weiterleiten der Versorgungsenergie als abgesicherte Versorgungsenergie über den zweiten Versorgungsausgang durch ein Ansteuern des zweiten Schaltelements abzusichern. Die Steuereinheit ist dazu ausgebildet, im Rahmen der Absicherung des zweiten Versorgungsausgangs einen weiteren Parameter der Versorgungsenergie und/oder einen weiteren Parameter der abgesicherten Versorgungsenergie mittels einer mit der Steuereinheit verbundenen zweiten Erfassungseinrichtung zu überwachen. Die Steuereinheit ist dazu ausgebildet, den Versorgungseingang und den zweiten Versorgungsausgang im Rahmen der Absicherung mittels des zweiten Schaltelements elektrisch voneinander zu trennen, sobald der weitere überwachte Parameter außerhalb eines weiteren vorgegebenen Wertebereichs liegt. Die Steuereinheit ist dazu ausgebildet, eine die Absicherung des zweiten Versorgungsausgangs betreffende Information mittels der Feldbusdaten über die Anschalteinheit mit dem Feldbusteilnehmer auszutauschen. Vorteilhafterweise ist das das zweite Schaltelement aufweisende Sicherungsmodul dazu ausgebildet, einen weiteren Verbraucher beispielsweise vor einem zu hohen elektrischen Strom abzusichern.

Der weitere Parameter der Versorgungsenergie und/oder der weiterer Parameter der abgesicherten Versorgungsenergie kann beispielsweise ein elektrischer Strom, eine elektrische Spannung, eine zeitlichen Entwicklung des elektrischen Stroms oder der elektrischen Spannung oder eine Zeitdauer, innerhalb derer ein elektrischer Strom begrenzt werden soll, sein. Beispielsweise kann der weitere Parameter der Versorgungsenergie und/oder der weitere Parameter der abgesicherten Versorgungsenergie auch eine Kombination aus dem elektrischen Strom mit der elektrischen Spannung und/oder eine Kombination aus einer zeitlichen Entwicklung des elektrischen Stroms und der elektrischen Spannung und/oder eine Kombination aus einem elektrischen Strom mit einer Zeitdauer, innerhalb derer ein elektrischer Strom begrenzt werden soll, und/oder eine Kombination aus einer elektrischen Spannung mit einer Zeitdauer, innerhalb derer ein elektrischer Strom begrenzt werden soll, sein.

Die Steuereinheit kann beispielsweise dazu ausgebildet sein, die die Absicherung des zweiten Versorgungsausgangs betreffende Information an den Feldbusteilnehmer zu übermitteln. Die die Absicherung des zweiten Versorgungsausgangs betreffende Information kann eine von der zweiten Erfassungseinrichtung erfasste elektrische Spannung, ein erfasster elektrischer Strom, eine erfasste zeitliche Entwicklung der elektrischen Spannung oder des elektrischen Stroms, ein erfasster Schaltzustand des zweiten Schaltelements oder eine von der Steuereinheit überwachte Zeitdauer, innerhalb derer das zweite Schaltelement einen elektrischen Strom begrenzt, sein.

Die Steuereinheit kann auch dazu ausgebildet, die die Absicherung des zweiten Versorgungsausgangs betreffende Information von dem Feldbusteilnehmer zu empfangen. Die die Absicherung des zweiten Versorgungsausgangs betreffende Information kann ein vorgegebener Wertebereich einer elektrischen Spannung, eines elektrischen Stroms, einer zeitlichen Entwicklung der elektrischen Spannung oder des elektrischen Stroms oder einer Zeitdauer, innerhalb derer das zweite Schaltelement einen elektrischen Strom begrenzt, sein. Vorteilhafterweise kann die Steuereinheit die die Absicherung des zweiten Versorgungsausgangs betreffende Information verwenden, um den zweiten Versorgungsausgang abzusichern.

In einer Ausführungsform sind die Anschalteinheit, die Steuereinheit, das erste Schaltelement und das Versorgungsmodul in einem gemeinsamen Gehäuse angeordnet sind. Vorteilhafterweise ist das Sicherungsmodul dadurch kompakt und kann als eine Busklemme in einen Busklemmenverbund angereiht werden.

In einer Ausführungsform weist das Gehäuse eine Seitenfläche auf. Die Seitenfläche ist dazu ausgebildet, unmittelbar an einer weiteren Seitenfläche eines weiteren Gehäuses eines zur Anbindung des Verbrauchers an das Feldbussystem ausgebildeten Signalmoduls anzuliegen. Der erste Versorgungsausgang ist an der Seitenfläche als Kontaktstruktur ausgebildet. Die Kontaktstruktur ist dazu ausgebildet, zur Weiterleitung der abgesicherten Versorgungsenergie unmittelbar an einem an der weiteren Seitenfläche als weitere Kontaktstruktur ausgebildeten weiteren Versorgungseingang des Signalmoduls anzuliegen und die weitere Kontaktstruktur elektrisch zu kontaktieren, wodurch das Sicherungsmodul unmittelbar an das Signalmodul anreihbar ist. Vorteilhafterweise kann die abgesicherte Versorgungsenergie über die Kontaktstrukturen weitergeleitet werden, ohne dass eine zusätzliche Verkabelung notwendig ist.

In einer Ausführungsform weist das Gehäuse eine quer zur Seitenfläche ausgebildete Frontseite auf. Der zweite Versorgungsausgang ist zur Weiterleitung der abgesicherten Versorgungsenergie an den weiteren Verbraucher als ein von der Frontseite zur elektrischen Kontaktierung zugängliches Kontaktelement ausgebildet.

Ein Feldbussystem weist einen Feldbusteilnehmer, ein als weiterer Feldbusteilnehmer des Feldbussystems ausgebildetes Sicherungsmodul und ein als weiterer Feldbusteilnehmer des Feldbussystems ausgebildetes Signalmodul zum Anschluss eines Verbrauchers an das Feldbussystem auf. Der Feldbusteilnehmer, das Sicherungsmodul und das Signalmodul sind über einen Feldbus miteinander verbunden. Das Sicherungsmodul weist eine Anschalteinheit, eine Steuereinheit, einen zum Einspeisen einer Versorgungsenergie in das Sicherungsmodul ausgebildeten Versorgungseingang, einen zum Weiterleiten der Versorgungsenergie als abgesicherte Versorgungsenergie an den Verbraucher ausgebildeten ersten Versorgungsausgang und ein zum elektrischen Verbinden oder zum elektrischen Trennen des Versorgungseingangs und des ersten Versorgungsausgangs ausgebildetes erstes Schaltelement auf. Die Anschalteinheit ist über eine Datenleitung mit der Steuereinheit verbunden und zur Anbindung des Sicherungsmoduls an den Feldbusteilnehmer mittels des Feldbusses ausgebildet, wodurch ein Austausch von Feldbusdaten zwischen der Steuereinheit und dem Feldbusteilnehmer ermöglicht wird. Die Steuereinheit ist mit dem ersten Schaltelement verbunden und dazu ausgebildet, das Weiterleiten der Versorgungsenergie als abgesicherte Versorgungsenergie über den ersten Versorgungsausgang durch ein Ansteuern des ersten Schaltelements abzusichern. Das Signalmodul weist eine weitere Steuereinheit und eine weitere Anschalteinheit auf. Die weitere Anschalteinheit ist über eine weitere Datenleitung mit der weiteren Steuereinheit verbunden und zur Anbindung des Signalmoduls an den Feldbusteilnehmer mittels des Feldbusses ausgebildet, wodurch ein Austausch von Feldbusdaten zwischen der weiteren Steuereinheit und dem Feldbusteilnehmer ermöglicht wird. Die weitere Steuereinheit ist zur Anbindung des Verbrauchers an das Feldbussystem ausgebildet. Das Signalmodul weist einen zur Einspeisung der abgesicherten Versorgungsenergie ausgebildeten weiteren Versorgungseingang und einen zum Weiterleiten der abgesicherten Versorgungsenergie an den Verbraucher ausgebildeten weiteren Versorgungsausgang auf. Der erste Versorgungsausgang und der weitere Versorgungseingang sind elektrisch miteinander verbunden.

In einer Ausführungsform des Feldbussystems weist das Sicherungsmodul ein zur Bereitstellung einer Betriebsenergie über eine Betriebsenergieversorgungsleitung für einen Betrieb der Steuereinheit ausgebildetes Versorgungsmodul auf. Das Versorgungsmodul ist mittels einer Versorgungsleitung und einer Versorgungsanbindungsleitung mit dem Versorgungseingang und mittels einer Feldbusenergieleitung und einer Feldbusenergieanbindungsleitung mit einem Feldbusenergieeingang elektrisch verbunden. Der Feldbusenergieeingang ist zum Einspeisen einer Feldbusenergie in das Sicherungsmodul zum Betrieb der Anschalteinheit ausgebildet. Das Versorgungsmodul ist dazu ausgebildet, die Betriebsenergie entweder aus der Versorgungsenergie oder aus der Feldbusenergie zu generieren.

In einer Ausführungsform des Feldbussystems sind die Anschalteinheit, die Steuereinheit, das erste Schaltelement und das Versorgungsmodul in einem gemeinsamen Gehäuse angeordnet. Die weitere Anschalteinheit, die weitere Steuereinheit und ein weiteres Schaltelement zum Ansteuern des Verbrauchers mittels der weiteren Steuereinheit sind in einem weiteren Gehäuse angeordnet. Das Gehäuse weist eine Seitenfläche auf. Die Seitenfläche liegt unmittelbar an einer weiteren Seitenfläche des weiteren Gehäuses des Signalmoduls an. Der erste Versorgungsausgang ist an der Seitenfläche als Kontaktstruktur ausgebildet. Die Kontaktstruktur liegt, zur Weiterleitung der abgesicherten Versorgungsenergie unmittelbar an einem an der weiteren Seitenfläche als weitere Kontaktstruktur ausgebildeten weiteren Versorgungseingang des Signalmoduls an, wodurch das Sicherungsmodul unmittelbar an das Signalmodul angereiht ist.

Die oben beschriebenen Eigenschaften, Merkmale und Vorteile dieser Erfindung sowie die Art und Weise, wie diese erreicht werden, sind klarer und deutlicher verständlich im Zusammenhang mit der folgenden Beschreibung der Ausführungsbeispiele, die im Zusammenhang mit den Zeichnungen näher erläutert werden. Dabei zeigen in jeweils schematischer Darstellung:
Fig. 1: ein Feldbussystem mit einem Sicherungsmodul gemäß einer ersten Ausführungsform;
Fig. 2A: eine erste Ausführungsform eines Versorgungsmoduls des Sicherungsmoduls;
Fig. 2B: eine zweite Ausführungsform eines Versorgungsmoduls des Sicherungsmoduls;
Fig. 3: ein Feldbussystem mit einem Sicherungsmodul gemäß einer zweiten Ausführungsform;
Fig. 4: ein Sicherungsmodul gemäß einer dritten Ausführungsform;
Fig. 5: eine Frontansicht eines als Busklemme ausgebildeten Sicherungsmoduls und eine Frontansicht eines als Busklemme ausgebildeten Signalmoduls;
Fig. 6: eine perspektivische Ansicht des als Busklemme ausgebildeten Sicherungsmoduls;
Fig. 7: einen Verbund mit einem Sicherungsmodul und einer Mehrzahl von Signalmodulen;
Fig. 8: einen Verbund mit zwei Sicherungsmodulen und einer Mehrzahl von Signalmodulen.

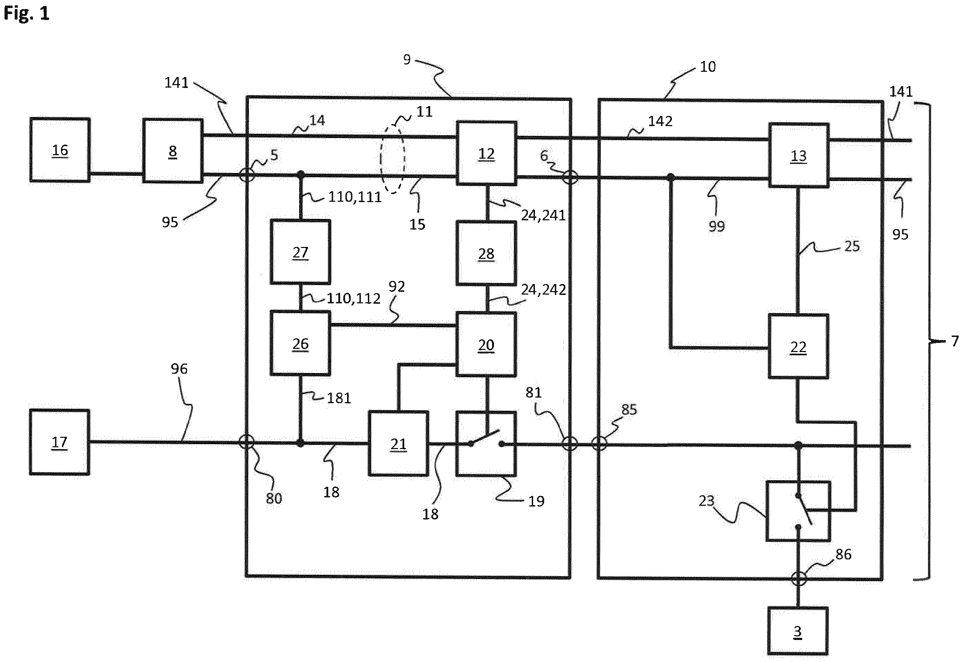

**Fig.** 1 zeigt eine schematische Darstellung eines Feldbussystems 7.

Das Feldbussystem 7 weist einen Feldbusteilnehmer 8, ein als Teilnehmer des Feldbussystems 7 ausgebildetes Sicherungsmodul 9 gemäß einer ersten Ausführungsform und ein als Teilnehmer des Feldbussystems 7 ausgebildetes Signalmodul 10 zum Anschluss eines Verbrauchers 3 an das Feldbussystem 7 auf.

Der Feldbusteilnehmer 8 kann beispielsweise eine Steuerung mit integriertem Feldbusmaster sein. Der Feldbusteilnehmer 8 kann jedoch auch ein Feldbuskoppler sein. Der Feldbuskoppler kann wiederum seinerseits mit der Steuerung verbunden sein, sodass die Steuerung dem Feldbuskoppler übergeordnet ist. Insofern kann ein Feldbusteilnehmer 8 gemäß der vorstehenden Definition auch als ein übergeordneter Feldbusteilnehmer 8 bezeichnet werden. Selbstverständlich kann das Feldbussystem 7 auch weitere Feldbusteilnehmer 8 enthalten, denen beliebige Aufgaben innerhalb des Feldbussystems 7 zugeordnet sind. So können auch das Sicherungsmodul 9 und/oder das Signalmodul 10 Feldbusteilnehmer 8 im Sinne der Erfindung sein. Die folgende beispielhafte Beschreibung der Ausführungsbeispiele bezieht sich auf Feldbussysteme 7 mit einem übergeordneten Feldbusteilnehmer 8. Insofern wird im Folgendem von einem übergeordneten Feldbusteilnehmer 8 gesprochen. Dies ist jedoch nicht einschränkend im Sinne der Erfindung zu verstehen.

Der übergeordnete Feldbusteilnehmer 8, das Sicherungsmodul 9 und das Signalmodul 10 sind über einen Feldbus 11 miteinander verbunden. Zur Anbindung an den Feldbus 11 weist das Sicherungsmodul 9 eine Anschalteinheit 12 und das Signalmodul 10 eine weitere Anschalteinheit 13 auf. Die Anschalteinheit 12 und die weitere Anschalteinheit 13 sind über den Feldbus 11 mit dem übergeordneten Feldbusteilnehmer 8 verbunden und dazu ausgebildet, Feldbusdaten zwischen dem übergeordneten Feldbusteilnehmer 8, dem Sicherungsmodul 9 und/oder dem Signalmodul 10 auszutauschen. Die Anschalteinheit 12 und/oder die weitere Anschalteinheit 13 können beispielsweise als ASIC (englisch: *application-specific integrated circuits,* anwendungsspezifische integrierte Schaltungen) ausgebildet sein. Die Anschalteinheit 12 und/oder die weitere Anschalteinheit 13 können auch als *Fieldbus Slave Controller* bezeichnet werden.

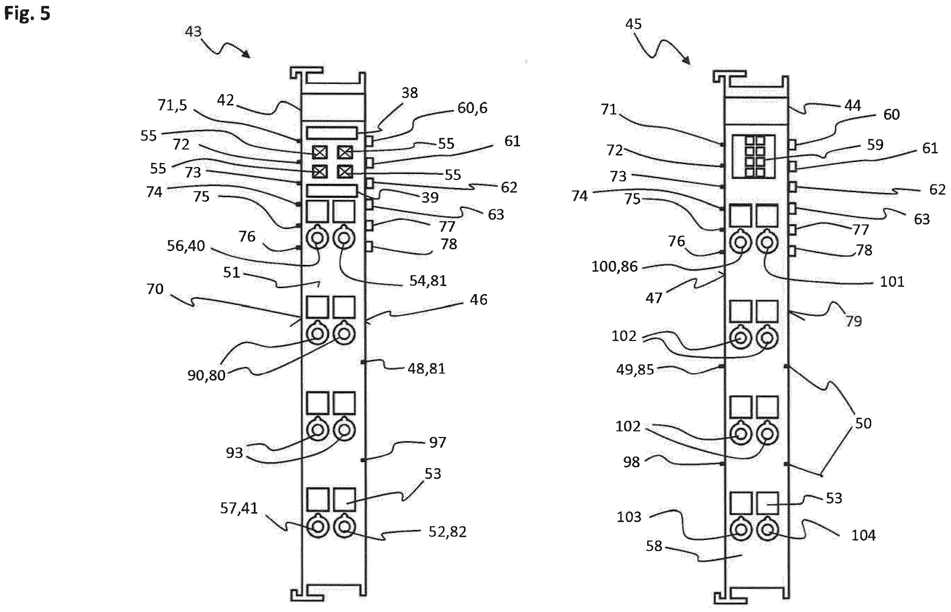

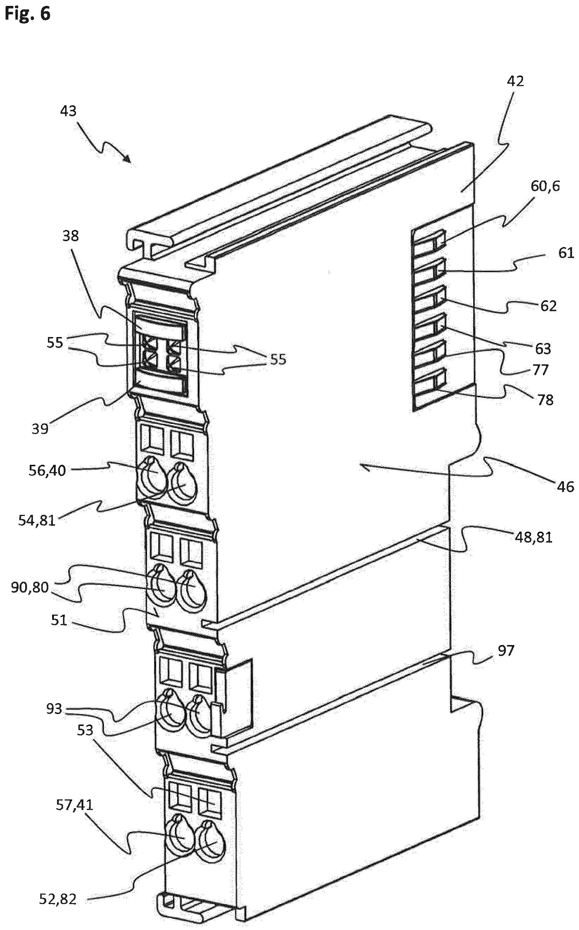

Der Feldbus 11 weist einen Kommunikationskanal 14, 141, 142 auf. Der Kommunikationskanal 14, 141, 142 weist einen ersten Kommunikationskanalabschnitt 14, einen zweiten Kommunikationskanalabschnitt 141 und einen dritten Kommunikationskanalabschnitt 142 auf. Der Feldbus 11 weist weiterhin eine Feldbusenergieversorgungsleitung 95, eine Feldbusenergieleitung 15 und eine Feldbusleitung 99 auf. Der erste Kommunikationskanalabschnitt 14 und die Feldbusenergieleitung 15 sind innerhalb des Sicherungsmoduls 9 angeordnet. Der dritte Kommunikationskanalabschnitt 142 und die Feldbusleitung 99 sind innerhalb des Signalmoduls 10 angeordnet. Der zweite Kommunikationskanalabschnitt 141 und die Feldbusenergieversorgungsleitung 95 sind außerhalb des Sicherungsmoduls 9 und außerhalb des Signalmoduls 10 angeordnet. Der erste Kommunikationskanalabschnitt 14, der zweite Kommunikationskanalabschnitt 141 und der dritte Kommunikationskanalabschnitt 142 sind elektrisch miteinander verbunden. Die Feldbusenergieleitung 15, die Feldbusenergieversorgungsleitung 95 und die Feldbusleitung 99 sind ebenfalls elektrisch miteinander verbunden. Der erste Kommunikationskanalabschnitt 14 und der dritte Kommunikationskanalabschnitt 142 können beispielsweise mittels einer Verkabelung elektrisch miteinander verbunden sein. Auch die Feldbusenergieleitung 15 und die Feldbusleitung 99 können mittels einer Verkabelung elektrisch miteinander verbunden sein. Eine weitere Möglichkeit einer elektrischen Verbindung zwischen dem ersten Kommunikationskanalabschnitt 14 und dem dritten Kommunikationskanalabschnitt 142 und zwischen der Feldbusenergieleitung 15 und der Feldbusleitung 99 wird im Rahmen der Beschreibung der Figuren 5 und 6 erläutert. Über den ersten Kommunikationskanalabschnitt 14, den zweiten Kommunikationskanalabschnitt 141 und den dritten Kommunikationskanalabschnitt 142 können die Feldbusdaten, beispielsweise auf dem EtherCAT-Protokoll basierende Nachrichten, zwischen dem übergeordneten Feldbusteilnehmer 8, dem Sicherungsmodul 9 und/oder dem Signalmodul 10 ausgetauscht werden. Unter einem Austausch von Feldbusdaten ist im gesamten Kontext dieser Beschreibung ein Datenfluss gemeint, der sowohl unidirektional und richtungsunabhängig, als auch bidirektional sein kann.

Für eine Versorgung für einen Betrieb der Anschalteinheit 12 und/oder der weitere Anschalteinheit 13 mit elektrischer Energie ist die Feldbusenergieversorgungsleitung 95 des Feldbusses 11 vorgesehen, die der Anschalteinheit 12 und/oder der weiteren Anschalteinheit 13 eine Feldbusenergie bereitstellt. Die Feldbusenergie wird von einem ersten Netzteil 16 bereitgestellt. Das erste Netzteil 16 kann beispielsweise dazu ausgebildet sein, eine Gleichspannung als Feldbusenergie bereitzustellen. Eine typische vom ersten Netzteil 16 zur Verfügung gestellte Gleichspannung kann beispielsweise 5V betragen. Die Feldbusenergie wird mittels eines Feldbusenergieeingangs 5 in das Sicherungsmodul 9 eingespeist, in dem Sicherungsmodul 9 mittels der Feldbusenergieleitung 15 weitergeleitet und mittels eines Feldbusenergieausgangs 6 aus dem Sicherungsmodul 9 ausgespeist. Die Feldbusenergieleitung 15 verbindet also den Feldbusenergieeingang 5 und den Feldbusenergieausgang 6 elektrisch. Einen analogen Aufbau in Bezug auf den Feldbusenergieeingang 5, die Feldbusenergieleitung 15 und den Feldbusenergieausgang 6 kann die Signaleinheit 10 und/oder weitere Feldbusteilnehmer aufweisen.

Während das Signalmodul 10 zum Anschluss des Verbrauchers 3 an das Feldbussystem 7 ausgebildet ist, ist das Sicherungsmodul 9 dazu ausgebildet, eine für einen Betrieb des Verbrauchers 3 vorgesehene Versorgungsenergie abzusichern, also eine abgesicherte Versorgungsenergie für den Betrieb des Verbrauchers bereitzustellen. Das Sicherungsmodul 9 weist dazu einen zum Einspeisen der von einem zweiten Netzteil 17 bereitgestellten und mittels einer Versorgungsenergieleitung 96 übertragenen bzw. weitergeleiteten Versorgungsenergie in das Sicherungsmodul 9 ausgebildeten Versorgungseingang 80 auf. Über den Versorgungseingang 80 kann beispielswiese eine Gleichspannung von 24V bereitgestellt werden. Gemäß der Norm EN61131-2 ist ein Gleichspannungsbereich von 20,4V bis 28,8V zulässig. Zum Weiterleiten der Versorgungsenergie als abgesicherte Versorgungsenergie an den Verbraucher 3 weist das Sicherungsmodul 9 einen ersten Versorgungsausgang 81 auf. Die am Versorgungseingang 80 eingespeiste Versorgungsenergie wird über eine Versorgungsleitung 18 innerhalb des Sicherungsmoduls 9 weitergeleitet. Der Versorgungseingang 80 und der erste Versorgungsausgang 81 sind elektrisch jeweils mit einem ersten Schaltelement 19 verbunden. Das erste Schaltelement 19 ist dazu vorgesehen, den Versorgungseingang 80 mit dem ersten Versorgungsausgang 81 elektrisch zu verbinden oder diese elektrisch voneinander zu trennen.

Das erste Schaltelement 19 kann beispielsweise ein elektronisches Schaltelement sein. Ein elektronisches Schaltelement kann beispielsweise aus einem Transistor oder mehreren verschalteten Transistoren bestehen. Bei dem Transistor kann es sich beispielsweise um einen MOSFET (englisch: *metal-oxide-semiconductor field-effect transistor,* Metall-Oxid-Halbleiter-Feldeffekttransistor) handeln. In diesem Fall sind der Versorgungseingang 80 elektrisch mit einer Drain-Elektrode und der erste Versorgungsausgang 81 elektrisch mit eine Source-Elektrode des Transistors verbunden.

Zum Ansteuern des ersten Schaltelements 19 weist das Sicherungsmodul 9 eine Steuereinheit 20 auf. Die Steuereinheit 20 ist mit dem ersten Schaltelement 19 verbunden und dazu ausgebildet, das Weiterleiten der Versorgungsenergie als abgesicherte Versorgungsenergie über den ersten Versorgungsausgang 81 abzusichern. Zum Absichern des ersten Versorgungsausgangs 81 ist die Steuereinheit 20 mit einer ersten Erfassungseinrichtung 21 verbunden und überwacht einen Parameter der Versorgungsenergie. Die erste Erfassungseinrichtung 21 ist dazu mit der Versorgungsleitung 18 verbunden. Die erste Erfassungseinrichtung 21 kann entweder versorgungseingangsseitig, wie dies in Fig. 1 dargestellt ist, oder versorgungsausgangsseitig mit der Versorgungsleitung 18 verbunden sein. In dem Fall würde die erste Erfassungseinrichtung 21 einen Parameter der abgesicherten Versorgungsenergie überwachen. Aber auch eine Kombination aus versorgungseingangsseitiger und versorgungsausgangsseitiger Verbindung der ersten Erfassungseinrichtung 21 ist möglich. Ebenso könnte für beide Seiten jeweils eine eigene erste Erfassungseinrichtung 21 mit der Versorgungsleitung 18 verbunden werden. Der von der ersten Erfassungseinrichtung 21 erfasste Parameter kann beispielsweise ein elektrischer Strom, eine elektrische Spannung, eine zeitliche Entwicklung des elektrischen Stroms oder der elektrischen Spannung oder eine Zeitdauer, innerhalb derer das erste Schaltelement 19 einen elektrischen Strom begrenzt, sein. Ein elektrischer Strom kann beispielsweise mittels eines als Transistor ausgebildeten ersten Schaltelements 19 begrenzt beziehungsweise reguliert werden. Sobald der Parameter außerhalb eines vorgegebenen Wertebereichs liegt, trennt die Steuereinheit 20 im Rahmen der Absicherung den Versorgungseingang 80 und ersten Versorgungsausgang 81 mittels des ersten Schaltelements 19 elektrisch voneinander und sichert auf diese Weise die über den ersten Versorgungsausgang 81 weitergeleitete abgesicherte Versorgungsenergie ab.

Ein von der ersten Erfassungseinrichtung 21 erfasster Parameter kann beispielsweise auch eine Kombination aus einem elektrischen Strom und einer elektrischen Spannung sein. In diesem Fall entspricht der von der ersten Erfassungseinrichtung 21 erfasste Parameter der elektrischen Leistung. Wenn beispielsweise eine elektrische Leistung in Höhe von 0VA bis 48VA als ein Wertebereich vorgegeben ist, und die erste Erfassungseinrichtung 21 eine elektrische Leistung in Höhe von 49VA erfasst, dann trennt die Steuereinheit 20 im Rahmen der Absicherung den Versorgungseingang 80 und ersten Versorgungsausgang 81 mittels des ersten Schaltelements 19 elektrisch voneinander und sichert auf diese Weise die über den ersten Versorgungsausgang 81 weitergeleitete Versorgungsenergie ab.

Ein von der ersten Erfassungseinrichtung 21 erfasster Parameter kann beispielsweise auch eine Kombination aus einem elektrischen Strom und einer zeitlichen Entwicklung des elektrischen Stroms sein. Es ist zum Beispiel möglich, dass in der Steuereinheit 20 ein auf einer Kennlinie basierender Wertebereich vorgegeben ist. Eine Kennlinie beschreibt ein Abschaltverhalten des Sicherungsmoduls 3 und kann beispielsweise einen maximalen elektrischen Strom oder eine maximale Zeitdauer, innerhalb derer ein maximaler elektrischer Strom fließen darf, beinhalten. Eine das Abschaltverhalten beschreibende Kennlinie kann somit insbesondere die Basis für den vorgegebenen Wertebereich bilden. Die in der Steuereinheit 20 hinterlegte Kennlinie enthält beispielsweise die Angabe, dass ein elektrischer Strom in Höhe von 5A maximal eine Zeitdauer von einer Millisekunde lang fließen darf. Wenn nun ein konstanter elektrischer Strom in Höhe von 5A über eine Zeitdauer von einer Millisekunde von der ersten Erfassungseinrichtung 21 erfasst wird, dann trennt die Steuereinheit 20 im Rahmen der Absicherung den Versorgungseingang 80 und ersten Versorgungsausgang 81 mittels des ersten Schaltelements 19 elektrisch voneinander und sichert auf diese Weise die über den ersten Versorgungsausgang 81 weitergeleitete Versorgungsenergie ab.

Ein von der ersten Erfassungseinrichtung 21 erfasster Parameter kann beispielsweise auch eine Kombination aus einer zeitlichen Entwicklung des elektrischen Stroms und einer zeitlichen Entwicklung der elektrischen Spannung sein. Wenn beispielsweise eine kapazitive Last als ein Verbraucher 3 an den ersten Versorgungsausgang 81 angeschlossen ist und diese kapazitive Last anschließend eingeschaltet wird, dann erreicht ein Einschaltstrom zu Beginn des Einschaltvorgangs einen maximalen Stromwert, wohingegen eine Einschaltspannung zu Beginn des Einschaltvorgangs einen Spannungswert von 0V besitzt. Im Laufe des Einschaltvorgangs nimmt der Stromwert des elektrischen Stroms fortlaufend bis zu einem Strombetriebswert, bei dem die kapazitive Last betrieben wird, ab, wohingegen die elektrischen Spannung fortlaufend bis zu einem Spannungsbetriebswert, bei dem die kapazitive Last betrieben wird, ansteigt. Durch die Erfassung der zeitlichen Entwicklung des elektrischen Stroms und der zeitlichen Entwicklung der elektrischen Spannung durch die erste Erfassungseinrichtung 21 kann beispielsweise ein Einschalten einer angeschlossenen, kapazitiven Last erkannt und in Abhängigkeit des vorgegebenen Wertebereichs durch die Steuereinheit 20 toleriert werden. In diesem Fall würde die Steuereinheit 20 den Versorgungseingang 80 und den ersten Versorgungsausgang 81 mittels des ersten Schaltelements 19 nicht elektrisch voneinander trennen.

Das Signalmodul 10 weist einen zur Einspeisung der abgesicherten Versorgungsenergie ausgebildeten weiteren Versorgungseingang 85 und einen zum Weiterleiten der abgesicherten Versorgungsenergie an den Verbraucher 3 ausgebildeten weiteren Versorgungsausgang 86 auf. Zur Ansteuerung des Verbrauchers 3 weist das Signalmodul 10 eine weitere Steuereinheit 22 auf. Die weitere Steuereinheit 22 ist mit der Feldbusenergieversorgungsleitung 95 elektrisch verbunden und kann so für einen Betrieb mit der Feldbusenergie versorgt werden. Die weitere Steuereinheit 22 ist mit einem weiteren Schaltelement 23 zum Ansteuern des Verbrauchers 3 verbunden und zur Anbindung des Verbrauchers 3 an das Feldbussystem 7 ausgebildet. Das weitere Schaltelement 23 ist also dazu ausgebildet den weiteren Versorgungsausgang 86 zu schalten.

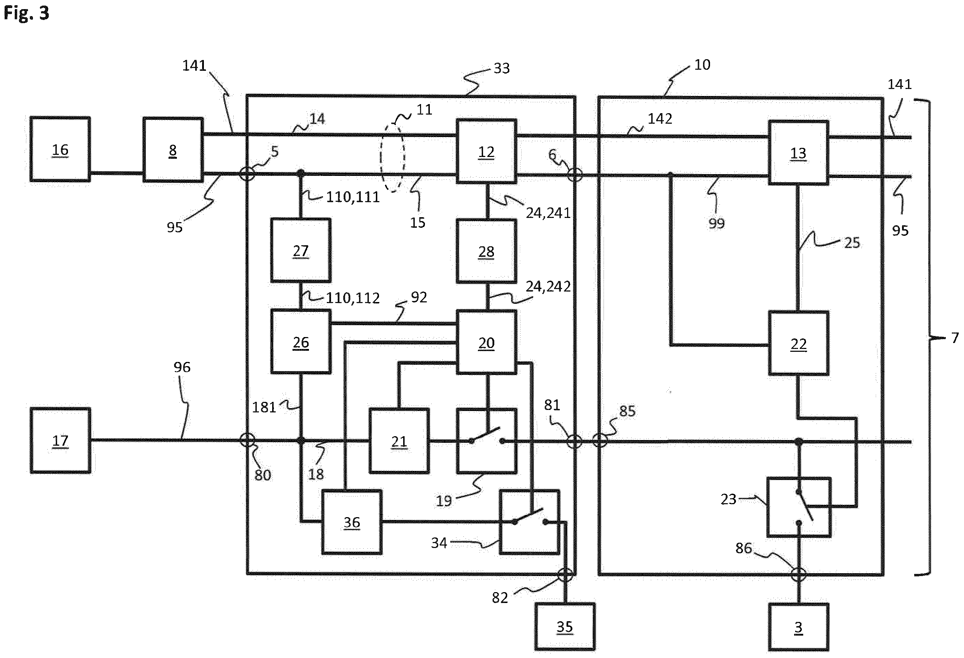

Die Steuereinheit 20 und die weitere Steuereinheit 22 können auch als *Microcontroller* bezeichnet werden. In der Darstellung der Fig. 1 und der Fig. 3 sind die Anschalteinheit 12 und die weitere Anschalteinheit 13, sowie die Steuereinheit 20 und die weitere Steuereinheit 22 als separate Elemente des Sicherungsmoduls 9 und des Signalmoduls 10 gezeigt. Dies ist jedoch nicht zwingend erforderlich. Die Steuereinheit 20 kann die Anschalteinheit 12 umfassen, während die weitere Steuereinheit 22 die weitere Anschalteinheit 13 umfassen kann.

Die Steuereinheit 20 ist mit der Anschalteinheit 12 über eine Datenleitung 24 verbunden. Dadurch ist ein Austausch von Feldbusdaten zwischen der Steuereinheit 20 und dem übergeordneten Feldbusteilnehmer 8 möglich. Aber auch ein Austausch von Feldbusdaten zwischen der Steuereinheit 20 und beliebigen anderen Teilnehmern des Feldbussystems 7, also weiteren Feldbusteilnehmern ist möglich. Die Steuereinheit 20 kann beispielsweise eine die Absicherung des ersten Versorgungsausgangs 81 betreffende Information mittels der Feldbusdaten über die Anschalteinheit 12 mit dem übergeordneten Feldbusteilnehmer 8 austauschen. Die die Absicherung des ersten Versorgungsausgangs 81 betreffende Information kann beispielswiese eine von der ersten Erfassungseinrichtung 21 erfasste elektrische Spannung, ein erfasster elektrischer Strom, eine erfasste zeitliche Entwicklung der elektrischen Spannung oder des elektrischen Stroms, ein Schaltzustand des ersten Schaltelements 19 oder eine von der Steuereinheit 20 überwachte Zeitdauer, innerhalb derer das erste Schaltelement 19 einen elektrischen Strom begrenzt, sein, die von der Steuereinrichtung 20 an den übergeordneten Feldbusteilnehmer 8 weitergeleitet wird. Es kann jedoch auch sein, dass die Steuereinheit 20 dazu ausgebildet ist, die die Absicherung betreffende Information von dem übergeordneten Feldbusteilnehmer 8 zu empfangen. In diesem Fall kann die die Absicherung des ersten Versorgungsausgangs 81 betreffende Information ein vorgegebener Wertebereich einer elektrischen Spannung, eines elektrischen Stroms, einer zeitlichen Entwicklung der elektrischen Spannung oder des elektrischen Stroms oder einer Zeitdauer, innerhalb derer das erste Schaltelement 19 einen elektrischen Strom begrenzt, sein. Diese Aufzählungen sind nicht vollständig, sodass auch eine andere, die Absicherung des ersten Versorgungsausgangs 81 betreffende oder die Absicherung des ersten Versorgungsausgangs 81 nicht betreffende weitere Information zwischen dem übergeordneten Feldbusteilnehmer 8 und der Steuereinheit 20 ausgetauscht werden kann.

Die weitere Steuereinheit 22 ist mit der weiteren Anschalteinheit 13 über eine weitere Datenleitung 25 verbunden. Dadurch ist ein Austausch von Feldbusdaten zwischen der weiteren Steuereinheit 22 und dem übergeordneten Feldbusteilnehmer 8 möglich. Aber auch ein Austausch von Feldbusdaten zwischen der weiteren Steuereinheit 22 und beliebigen anderen Teilnehmern des Feldbussystems 7, also weiteren Feldbusteilnehmern, ist möglich. Die weitere Steuereinheit 22 kann beispielsweise eine die Ansteuerung des Verbrauchers 3 betreffende Information mittels der Feldbusdaten über die weitere Anschalteinheit 13 mit dem übergeordneten Feldbusteilnehmer 8 austauschen.

Das Sicherungsmodul 9 weist weiterhin ein Versorgungsmodul 26 auf. Das Versorgungsmodul 26 ist dazu ausgebildet, eine Betriebsenergie für einen Betrieb der Steuereinheit 20 bereitzustellen. Dazu ist das Versorgungsmodul 26 mittels einer Betriebsenergieversorgungsleitung 92 mit der Steuereinheit verbunden. Zur Bereitstellung der Betriebsenergie ist das Versorgungsmodul 26 über eine Versorgungsenergieanbindungsleitung 181 mit der Versorgungsleitung 18 und über eine Feldbusenergieanbindungsleitung 110 mit der Feldbusenergieleitung 15 verbunden. Das Versorgungsmodul 26 ist dazu ausgebildet, die Betriebsenergie entweder aus der Versorgungsenergie oder aus der Feldbusenergie zu generieren. Das Versorgungsmodul 26 kann beispielsweise dazu ausgebildet sein, die Betriebsenergie für die Steuereinheit 20 aus der Versorgungsenergie zu generieren. Falls die Versorgungsenergie außerhalb eines vorgegebenen Versorgungsenergiewertebereichs liegt, kann das Versorgungsmodul 26 die Betriebsenergie aus der Feldbusenergie generieren. Das Versorgungsmodul 26 kann also einen Teil der Feldbusenergie als eine Alternative zur Versorgungsenergie für den Betrieb der Steuereinheit 20 verwenden. Dies kann jedoch auch umgekehrt gelten. Typischerweise kann eine für den Betrieb der Steuereinheit 20 notwendige Betriebsenergie eine elektrische Gleichspannung von 3,3V aufweisen.

Dadurch, dass das Versorgungsmodul 26 nicht nur mit der Versorgungsleitung 18, sondern auch mit der Feldbusenergieleitung 15 verbunden ist, ist es zweckmäßig, die Feldbusenergieleitung 15 und die Versorgungsleitung 18 galvanisch voneinander zu trennen. Weiterhin ist die Steuereinheit 20 über das Versorgungsmodul 26 mit der Versorgungsleitung 18 und über die Anschalteinheit 12 mit der Feldbusenergieleitung 15 verbunden. Daher ist es auch diesbezüglich zweckmäßig, die Feldbusenergieleitung 15 und die Versorgungsleitung 18 galvanisch voneinander zu trennen. Zur galvanischen Trennung der Feldbusenergieleitung 15 und der Versorgungsleitung 18 weist das Sicherungsmodul 9 eine erste Isolationsvorrichtung 27 und eine zweite Isolationsvorrichtung 28 auf. Die erste Isolationsvorrichtung 27 ist in der Feldbusenergieanbindungsleitung 110 zwischen dem Feldbusenergieeingang 5 und dem Versorgungsmodul 26 geschaltet. Die Feldbusenergieanbindungsleitung 110 weist somit einen ersten Abschnitt 111 und einen zweiten Abschnitt 112 auf. Die erste Isolationsvorrichtung 27 trennt den ersten Abschnitt 111 und den zweiten Abschnitt 112 der Feldbusenergieanbindungsleitung 110 galvanisch voneinander.

Die zweite Isolationsvorrichtung 28 ist in der Datenleitung 24 zwischen die mit der Feldbusenergieleitung 15 verbundene Anschalteinheit 12 und die mit dem Versorgungsmodul 26 verbundene Steuereinheit 20 geschaltet. Die Datenleitung 24 weist somit einen ersten Abschnitt 241 und einen zweiten Abschnitt 242 auf. Die zweite Isolationsvorrichtung 28 trennt den ersten Abschnitt 241 und den zweiten Abschnitt 242 der Datenleitung 24 galvanisch voneinander. Damit wird auch die Anschalteinheit 12 galvanisch von der Steuereinheit 20 getrennt. Somit wird die Datenübertragung bzw. Kommunikation galvanisch getrennt.

Durch eine galvanische Trennung des ersten und des zweiten Abschnitts 111, 112 der Feldbusenergieanbindungsleitung 110 und durch eine galvanische Trennung des ersten und des zweiten Abschnitts 241, 242 der Datenleitung 24 sind die Versorgungsleitung 18 und die Feldbusenergieleitung 18 galvanisch voneinander getrennt. Somit wird die Energieversorgung galvanisch getrennt. Dadurch kann eine Übertragung von Störsignalen zwischen der Versorgungsenergieleitung 18 und der Feldbusenergieleitung 15 vermieden werden. Insbesondere ist dadurch auch die Feldbusenergieleitung 15 von der Betriebsenergieleitung 92 galvanisch getrennt, wodurch eine Übertragung von Störsignalen zwischen der Feldbusenergieleitung 15 und der Betriebsenergieleitung 92 vermieden werden kann. Ebenfalls galvanisch voneinander getrennt sind die Versorgungsenergieleitung 18 und der Kommunikationskanal 14, 141, 142. Damit kann auch eine Übertragung von Störsignalen zwischen der Versorgungsenergieleitung 18 und dem Kommunikationskanal 14, 141, 142, über den ein Austausch von Feldbusdaten erfolgen kann, vermieden werden. Insgesamt sind also die Versorgungsenergieleitung 18 und der Feldbus 11 galvanisch voneinander getrennt.

Die erste Isolationsvorrichtung 27 und/oder die zweite Isolationsvorrichtung 28 können beispielsweise digitale Isolatoren, Optokoppler, kapazitive Koppler oder induktive Koppler sein. Durch die galvanische Trennung der Versorgungsleitung 18 bzw. der Betriebsenergieleitung 92 und der Feldbusenergieleitung 15 kann eine Übertragung von Störsignalen auf den Feldbus 11 verhindert werden. Die erste Isolationsvorrichtung 27 und/oder die zweite Isolationsvorrichtung 28 können aber auch entfallen.

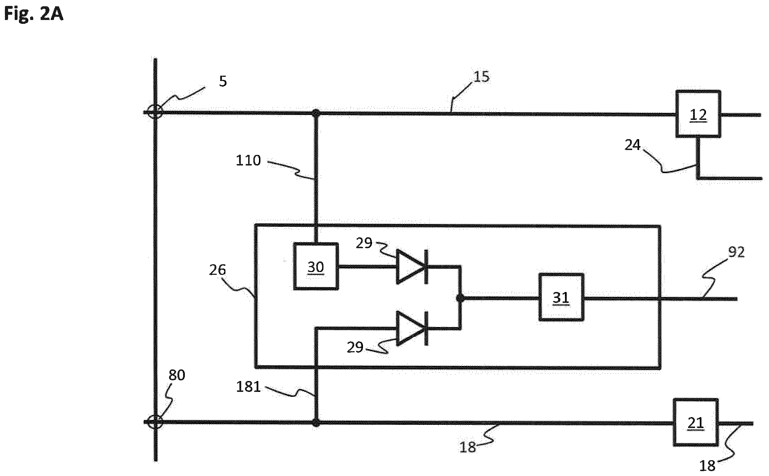

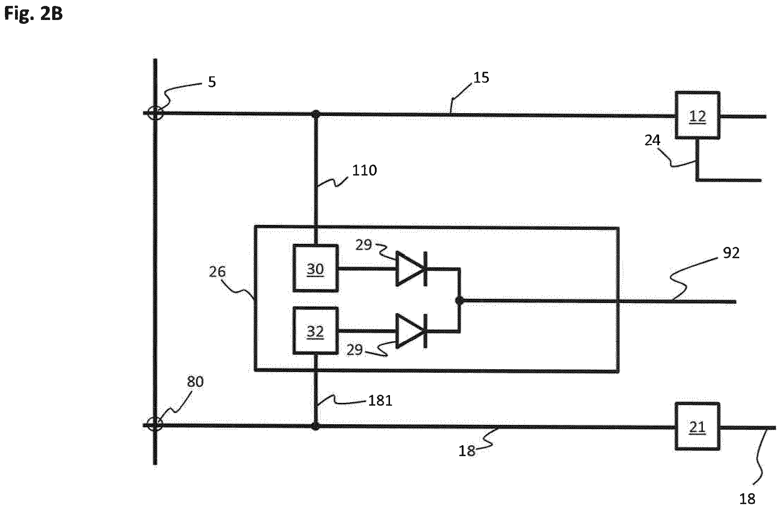

**Fig. 2A** zeigt eine schematische Darstellung einer ersten Ausführungsform des Versorgungsmoduls 26. **Fig. 2B** zeigt eine schematische Darstellung einer zweiten Ausführungsform des Versorgungsmoduls 26. In beiden Fällen ist das Versorgungsmodul 26 zur Einspeisung der Feldbusenergie mittels der Feldbusenergieleitung 15 und der Feldbusenergieanbindungsleitung 110 elektrisch mit dem Feldbusenergieeingang 5 und zur Einspeisung der Versorgungsenergie mittels der Versorgungsleitung 18 und der Versorgungsenergieanbindungsleitung 181 elektrisch mit dem Versorgungseingang 80 verbunden.

Da das Versorgungsmodul 26 allgemein dazu ausgebildet ist, die Betriebsenergie für die Steuereinheit 20 entweder aus der Feldbusenergie oder aus der Versorgungsenergie zu generieren, weisen die in Fig. 2A und 2B dargestellten Ausführungsformen des Versorgungsmoduls 26 eine ODER-Schaltung auf. Die ODER-Schaltung kann, wie in den Darstellungen der Fig. 2A oder 2B beispielhaft gezeigt ist, auf zwei Dioden 29 beruhen. Dem Fachmann sind weitere alternative Implementierungen einer ODER-Schaltung bekannt. Die Dioden 29 sind dazu ausgebildet, entweder die über die Feldbusenergieleitung 15 bereitgestellte Feldbusenergie bzw. eine auf der Feldbusenergie basierende erste Zwischenenergie oder die über die Versorgungsleitung 18 bereitgestellte Versorgungsenergie durchzulassen. Bei der Feldbusenergie und/oder der Versorgungsenergie kann es sich, wie beschrieben, um eine Gleichspannung handeln. Die über die Feldbusenergieleitung 15 bereitgestellte Gleichspannung kann auch als Feldbusspannung bezeichnet werden. Die über die Versorgungsleitung 18 bereitgestellte Gleichspannung kann auch als Versorgungsspannung bezeichnet werden. Die Feldbusspannung kann als ein Parameter der Feldbusenergie angesehen werden und beispielsweise mit der Feldbusenergie korrelieren. Die Versorgungsspannung kann als ein Parameter der Versorgungsenergie angesehen werden und beispielsweise mit der Versorgungsenergie korrelieren. Entweder wird die Feldbusspannung bzw. eine auf der Feldbusspannung basierende erste Zwischenspannung oder die Versorgungsspannung von den Dioden 29 durchgelassen, in Abhängigkeit der Höhe der Spannungen, wobei stets nur die höhere Spannung durchgelassen wird. Eine von der ersten Ausführungsform des Versorgungsmoduls 26 generierte Betriebsspannung kann also entweder aus der Feldbusspannung bzw. der auf der Feldspannung basierenden ersten Zwischenspannung oder aus der Versorgungsspannung generiert werden. Die Betriebsspannung kann als ein Parameter der Betriebsenergie angesehen werden und beispielsweise mit der Betriebsenergie korrelieren.

Fig. 2A stellt neben der ersten Ausführungsform des Versorgungsmoduls 26 den Feldbusenergieeingang 5, die Feldbusenergieleitung 15, die Feldbusenergieanbindungsleitung 110, die Anschalteinheit 12, die Datenleitung 24, den Versorgungseingang 80, die Versorgungsleitung 18, die Versorgungsenergieanbindungsleitung 181, die Betriebsenergieleitung 92 und die erste Erfassungseinrichtung 21 der ersten Ausführungsform des Sicherungsmoduls 9 dar. Aus Gründen der Übersichtlichkeit wird auf die Darstellung der weiteren Komponenten, wie zum Beispiel der ersten Isolationsvorrichtung 27 verzichtet.

Die erste Ausführungsform des Versorgungsmoduls 26 stellt die Betriebsspannung für die Steuereinheit 20 mithilfe eines über die Feldbusenergieanbindungsleitung 110 mit der Feldbusenergieleitung 15 elektrisch verbundenen ersten Wandlers 30 und eines an die Dioden 29 ausgangsseitig anschließenden und mit der Steuereinheit 20 elektrisch verbundenen zweiten Wandlers 31 bereit. Hierzu wird die Feldbusspannung mittels des ersten Wandlers 30 in die erste Zwischenspannung umgewandelt, so dass die erste Zwischenspannung auf der Feldbusspannung basiert. Beispielsweise kann der erste Wandler 30 dazu ausgebildet sein, die Feldbusspannung von 5V in eine erste Zwischenspannung von 10V umzuwandeln. Der erste Wandler 30 fungiert somit als Aufwärtswandler und kann zum Beispiel als sogenannte Ladungspumpe ausgebildet sein. Da die Versorgungsspannung typicherweise 24V beträgt, wird in diesem Fall die Versorgungsspannung von der ODER-Schaltung mit den Dioden 29 durchgelassen, da die Versorgungsspannung höher als die erste Zwischenspannung ist. Der zweite Wandler 31 kann die somit anliegende Versorgungsspannung in die Betriebsspannung, die typischerweise 3,3V beträgt, umwandeln. Der zweite Wandler 31 fungiert dementsprechend als Abwärtswandler. Fällt die Versorgungsspannung aus oder liegt sie unter der vom ersten Wandler 30 erzeugten ersten Zwischenspannung von 10V, so wird die vom ersten Wandler 30 erzeugte erste Zwischenspannung von der ODER-Schaltung durchgelassen und vom zweiten Wandler 31 in die Betriebsspannung umgewandelt. Der erste Wandler 30 erhöht also zunächst die Feldbusspannung, damit der zweite Wandler 31 die Möglichkeit hat, die Betriebsspannung zu generieren. Würde der zweite Wandler 31 nämlich lediglich die Feldbusspannung erhalten, so kann es sein, dass die Feldbusspannung nicht dazu ausreicht, die Betriebsspannung zu generieren. Es kann beispielsweise sein, dass der zweite Wandler 31 mindestens 5,6V Eingangsspannung benötigt, um daraus die 3,3V Betriebsspannung zu generieren. An einem Ausgang der ersten Ausführungsform des Versorgungsmoduls 26 wird die Betriebsspannung über eine Betriebsenergieleitung 92 der Steuereinheit 20 zur Verfügung gestellt.

**Fig. 2B** zeigt eine schematische Darstellung einer zweiten Ausführungsform des Versorgungsmoduls 26. Die elektrische Anbindung des Versorgungsmoduls 26 gemäß der zweiten Ausführungsform mit der Feldbusenergieleitung 15, der Versorgungsleitung 18 und der Betriebsenergieleitung 92 erfolgt analog zu der Anbindung des Versorgungsmoduls 26 gemäß der in Fig. 2A beschriebenen ersten Ausführungsform. Um Wiederholungen zu vermeiden wird diesbezüglich nicht erneut darauf eingegangen.

Fig. 2B stellt neben der zweiten Ausführungsform des Versorgungsmoduls 26 den Feldbusenergieeingang 5, die Feldbusenergieleitung 15, die Feldbusenergieanbindungsleitung 110, die Anschalteinheit 12, die Datenleitung 24, den Versorgungseingang 80, die Versorgungsleitung 18, die Versorgungsenergieanbindungsleitung 118, die Betriebsenergieleitung 92 und die erste Erfassungseinrichtung 21 der ersten Ausführungsform des Sicherungsmoduls 9 dar. Aus Gründen der Übersichtlichkeit wird auf die Darstellung der weiteren Komponenten, wie zum Beispiel der ersten Isolationsvorrichtung 27 verzichtet.

Die zweite Ausführungsform des Versorgungsmoduls 26 stellt die Betriebsspannung für die Steuereinheit 20 mithilfe des über die Feldbusenergieanbindungsleitung 110 mit der Feldbusenergieleitung 15 elektrisch verbundenen ersten Wandlers 30 und eines über die Versorgungenergieanbindungsleitung 181 mit der Versorgungsleitung 18 elektrisch verbundenen dritten Wandlers 32 bereit. Der erste Wandler 30 ist dazu ausgebildet, wie schon bezüglich der ersten Ausführungsform des Versorgungsmoduls 26 beschrieben, die Feldbusspannung in eine erste Zwischenspannung umzuwandeln. Der dritte Wandler 32 ist dazu ausgebildet, die Versorgungsspannung in eine zweite Zwischenspannung umzuwandeln. Die erste Zwischenspannung des ersten Wandlers 30 und die zweite Zwischenspannung des dritten Wandlers 32 können einen unterschiedlichen Wert besitzen. Beispielsweise kann der erste Wandler 31 eine erste Zwischenspannung von 3,0 V bereitstellen und der dritte Wandler 32 eine zweite Zwischenspannung von 3,3 V bereitstellen. Die ODER-Schaltung kann, wie in den Darstellung der Fig. 2B beispielhaft gezeigt ist, auf zwei Dioden 29 beruhen. Die Dioden 29 sind dazu ausgebildet, entweder die auf der Feldbusenergie basierende erste Zwischenspannung oder die auf der Versorgungsenergie basierende zweite Zwischenspannung als bereitgestellte Betriebsspannung für die Steuereinheit 20 durchzulassen. In diesem Fall entfällt der in der Fig. 2A dargestellten zweite Wandler 31, da der erste Wandler 30 und der dritte Wandler 32 gleichermaßen eine von der Steuereinheit 20 nutzbare Betriebsspannung erzeugen, die entsprechend der Steuereinheit 20 bereitgestellt wird. An einem Ausgang der zweiten Ausführungsform des Versorgungsmoduls 26 wird die Betriebsspannung mittels einer Betriebsenergieleitung 92 der Steuereinheit 20 zur Verfügung gestellt.

In einer nicht dargestellten weiteren Ausführungsform können der erste Wandler 30, der zweite Wandler 31 und der dritte Wandler 32 gemeinsam in einer Schaltung verwendet werden. Die nicht dargestellte Ausführungsform wäre in diesem Fall eine Kombination der ersten und zweiten Ausführungsform des Versorgungsmoduls 26.

Je nach konkretem Anwendungsfall können der erste Wandler 30, der zweite Wandler 31 und/oder der dritte Wandler 32 als Abwärts- beziehungsweise Aufwärtswandler implementiert werden. Wenn beispielsweise die Versorgungsenergie eine Wechselspannung ist, so kann beispielsweise der dritte Wandler 32 dazu ausgebildet sein, zusätzlich eine Wechselspannung in eine Gleichspannung umwandeln.

**Fig.** 3 zeigt eine schematische Darstellung eines Feldbussystems 7 mit einem Sicherungsmodul 33 gemäß einer zweiten Ausführungsform. Die zweite Ausführungsform des Sicherungsmoduls 33 und die erste Ausführungsform des Sicherungsmoduls 9 sind im Wesentlichen gleich aufgebaut. Eine Vielzahl von Elementen der ersten und der zweiten Ausführungsform sind nahezu identisch und besitzen das gleiche Bezugszeichen. In der nachfolgenden Figurenbeschreibung werden lediglich die Unterschiede zwischen der zweiten Ausführungsform des Sicherungsmoduls 33 und der ersten Ausführungsform des Sicherungsmoduls 9 erläutert.

Das Sicherungsmodul 33 gemäß der zweiten Ausführungsform weist neben dem ersten Schaltelement 19 ein zweites Schaltelement 34 auf, das mit der Steuereinheit 20 verbunden ist. Die Steuereinheit 20 ist dazu ausgebildet, das erste Schaltelement 19 und das zweite Schaltelement 34 unabhängig voneinander anzusteuern. Das zweite Schaltelement 34 ist zum elektrischen Verbinden oder zum elektrischen Trennen des Versorgungseingangs 80 und eines zweiten Versorgungsausgangs 82 des Sicherungsmoduls 33 ausgebildet. Der zweite Versorgungsausgang 82 ist beispielsweise zum Weiterleiten der Versorgungsenergie als abgesicherte Versorgungsenergie an einen weiteren Verbraucher 35 ausgebildet, wie dies in Fig. 3 dargestellt ist. Der zweite Versorgungsausgang 82 kann aber auch dazu ausgebildet sein, die Versorgungsenergie an den Verbraucher 3 weiterzuleiten. Das zweite Schaltelement 34 kann beispielsweise ein elektronisches Schaltelement sein. Ein elektronisches Schaltelement kann beispielsweise aus einem Transistor oder mehreren verschalteten Transistoren bestehen. Bei dem Transistor kann es sich beispielsweise um einen MOSFET (englisch: *metal-oxide-semiconductor field-effect transistor,* Metall-Oxid-Halbleiter-Feldeffekttransistor) handeln. In diesem Fall sind der Versorgungseingang 80 elektrisch mit einer Drain-Elektrode und der zweite Versorgungsausgang 82 elektrisch mit einer Source-Elektrode des Transistors verbunden.

Die Steuereinheit 20 ist dazu ausgebildet, das Weiterleiten der Versorgungsenergie als abgesicherte Versorgungsenergie über den zweiten Versorgungsausgang 82 abzusichern. Zum Absichern des zweiten Versorgungsausgangs 82 ist die Steuereinheit 20 mit einer zweiten mit der Versorgungsleitung 18 verbundenen Erfassungseinrichtung 36 verbunden und überwacht einen weiteren Parameter der Versorgungsenergie. Der seitens der zweiten Erfassungseinrichtung 36 erfasste und von der Steuereinheit 20 überwachte weitere Parameter kann verschieden oder auch gleich dem Parameter sein, der von der ersten Erfassungseinrichtung 21 erfasst und von der Steuereinheit 20 überwacht wird. Die zweite Erfassungseinrichtung 36 kann entweder versorgungseingangsseitig, wie dies in Fig. 3 dargestellt ist, oder versorgungsausgangsseitig mit der Versorgungsleitung 18 verbunden sein. In dem Fall würde die zweite Erfassungseinrichtung 36 einen Parameter der abgesicherten Versorgungsenergie überwachen. Aber auch eine Kombination aus versorgungseingangsseitiger und versorgungsausgangsseitiger Verbindung der zweiten Erfassungseinrichtung 36 ist möglich. Ebenso könnte für beide Seiten jeweils eine eigene zweite Erfassungseinrichtung 36 mit der Versorgungsleitung 18 verbunden werden. Der von der zweiten Erfassungseinrichtung 36 erfasste weitere Parameter kann beispielsweise ein elektrischer Strom, eine elektrische Spannung, eine zeitliche Entwicklung des elektrischen Stroms oder der elektrischen Spannung oder eine Zeitdauer, innerhalb derer das zweite Schaltelement 34 einen elektrischen Strom begrenzt, sein. Ein elektrischer Strom kann beispielsweise mittels eines als Transistor ausgebildeten zweiten Schaltelements 34 begrenzt werden. Sobald der weitere Parameter außerhalb eines weiteren vorgegebenen Wertebereichs liegt, trennt die Steuereinheit 20 im Rahmen der Absicherung den Versorgungseingang 80 und den zweiten Versorgungsausgang 82 mittels des zweiten Schaltelements 34 elektrisch voneinander und sichert auf diese Weise die über den zweiten Versorgungsausgang 82 weitergeleitete Versorgungsenergie ab.

Ein von der zweiten Erfassungseinrichtung 36 erfasster weiterer Parameter kann beispielsweise auch eine Kombination aus einem elektrischen Strom und einer elektrischen Spannung sein. In diesem Fall entspricht der von der zweiten Erfassungseinrichtung 36 erfasste weitere Parameter der elektrischen Leistung. Wenn beispielsweise eine elektrische Leistung in Höhe von 0VA bis 48VA als ein weiterer Wertebereich vorgegeben ist, und die zweite Erfassungseinrichtung 36 eine elektrische Leistung in Höhe von 49VA erfasst, dann trennt die Steuereinheit 20 im Rahmen der Absicherung den Versorgungseingang 80 und zweiten Versorgungsausgang 82 mittels des zweiten Schaltelements 34 elektrisch voneinander und sichert auf diese Weise die über den zweiten Versorgungsausgang 82 weitergeleitete abgesicherte Versorgungsenergie ab.

Ein von der zweiten Erfassungseinrichtung 36 erfasster weiterer Parameter kann beispielsweise auch eine Kombination aus einem elektrischen Strom und einer zeitlichen Entwicklung des elektrischen Stroms sein. Es sei zum Beispiel möglich, dass in der Steuereinheit 20 ein auf einer Kennlinie basierender Wertebereich vorgegeben ist. Eine Kennlinie beschreibt ein Abschaltverhalten des Sicherungsmoduls 33 und kann beispielsweise einen maximalen elektrischen Strom oder eine maximale Zeitdauer, innerhalb derer ein maximaler elektrischer Strom fließen darf, beinhalten. Eine das Abschaltverhalten beschreibende Kennlinie kann somit insbesondere die Basis für den weiteren vorgegebenen Wertebereich bilden. Die in der Steuereinheit 20 hinterlegte Kennlinie enthält beispielsweise die Angabe, dass ein elektrischer Strom in Höhe von 5A maximal eine Zeitdauer von einer Millisekunde lang fließen darf. Wenn nun ein konstanter elektrischer Strom in Höhe von 5A über eine Zeitdauer von einer Millisekunde von der zweiten Erfassungseinrichtung 36 erfasst wird, dann trennt die Steuereinheit 20 im Rahmen der Absicherung den Versorgungseingang 80 und zweiten Versorgungsausgang 82 mittels des zweiten Schaltelements 34 elektrisch voneinander und sichert auf diese Weise die über den zweiten Versorgungsausgang 82 weitergeleitete abgesicherte Versorgungsenergie ab.

Ein von der zweiten Erfassungseinrichtung 36 erfasster weiterer Parameter kann beispielsweise auch eine Kombination aus einer zeitlichen Entwicklung des elektrischen Stroms und einer zeitlichen Entwicklung der elektrischen Spannung sein. Wenn beispielsweise eine kapazitive Last als ein weiterer Verbraucher 35 an den zweiten Versorgungsausgang 82 angeschlossen ist und diese kapazitive Last anschließend eingeschaltet wird, dann erreicht ein Einschaltstrom zu Beginn des Einschaltvorgangs einen maximalen Stromwert, wohingegen eine Einschaltspannung zu Beginn des Einschaltvorgangs einen Spannungswert von 0V besitzt. Im Laufe des Einschaltvorgangs nimmt der Stromwert des elektrischen Stroms fortlaufend bis zu einem Strombetriebswert, bei dem die kapazitive Last betrieben wird, ab, wohingegen die elektrischen Spannung fortlaufend bis zu einem Spannungsbetriebswert, bei dem die kapazitive Last betrieben wird, ansteigt. Durch die Erfassung der zeitlichen Entwicklung des elektrischen Stroms und der zeitlichen Entwicklung der elektrischen Spannung durch die zweite Erfassungseinrichtung 36 kann beispielsweise ein Einschalten einer angeschlossenen, kapazitiven Last erkannt und in Abhängigkeit des weiteren vorgegebenen Wertebereichs durch die Steuereinheit 20 toleriert werden. In diesem Fall würde die Steuereinheit 20 den Versorgungseingang 80 und den zweiten Versorgungsausgang 82 mittels des zweiten Schaltelements 34 nicht elektrisch voneinander trennen.

Die Steuereinheit 20 kann beispielsweise eine die Absicherung des zweiten Versorgungsausgangs 82 betreffende Information mittels der Feldbusdaten über die Anschalteinheit 12 mit dem übergeordneten Feldbusteilnehmer 8 austauschen.

Die Steuereinheit 20 ist auch dazu ausgebildet, das erste Schaltelement 19 und das zweite Schaltelement 34 zeitversetzt zu schalten. Dies kann beispielsweise dann zweckmäßig sein, wenn zeitgleich über den ersten Versorgungsausgang 81 und über den zweiten Versorgungsausgang 82 jeweils ein hoher elektrischer Strom fließen würde.

Das Sicherungsmodul 33 gemäß der zweiten Ausführungsform kann auch eine Mehrzahl von Schaltelementen aufweisen, die wie das erste Schaltelement 19 und das zweite Schaltelement 34 ausgebildet sind. Entsprechend kann das Sicherungsmodul 33 auch eine Mehrzahl von Erfassungseinrichtungen 21,36 aufweisen.

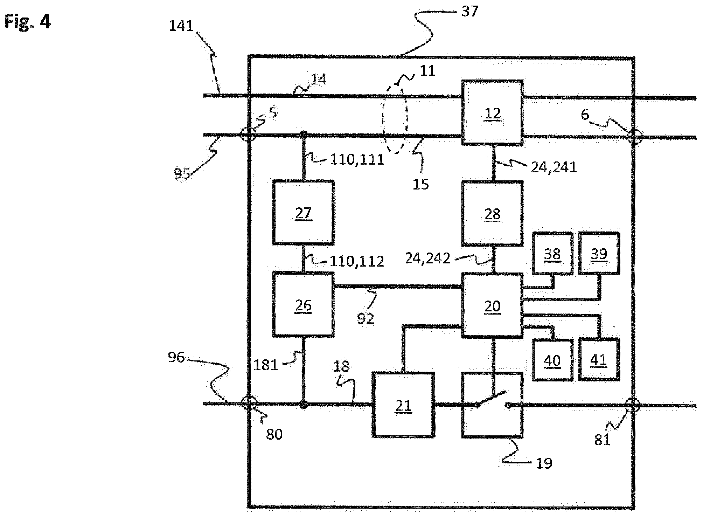

**Fig. 4** zeigt eine schematische Darstellung eines Sicherungsmoduls 37 gemäß einer dritten Ausführungsform. Die dritte Ausführungsform des Sicherungsmoduls 37 und die erste Ausführungsform des Sicherungsmoduls 9 sind im Wesentlichen gleich aufgebaut. Eine Vielzahl von Elementen der dritten und der ersten Ausführungsform 9, 37 sind nahezu identisch und besitzen das gleiche Bezugszeichen. In der nachfolgenden Figurenbeschreibung werden lediglich die Unterschiede zwischen der dritten Ausführungsform des Sicherungsmoduls 37 und der ersten Ausführungsform des Sicherungsmoduls 9 erläutert.

Sowohl bei dem Sicherungsmodul 9 gemäß der ersten Ausführungsform, als auch bei dem Sicherungsmodul 33 der zweiten Ausführungsform, als auch bei dem Sicherungsmodul 37 gemäß der dritten Ausführungsform besteht die Möglichkeit, die absichernde Funktion des Sicherungsmoduls 9,33,37 mittels der Steuereinheit 20 zu aktivieren, also einzuschalten, als auch zu deaktivieren, also auszuschalten. Beim Einschalten wird mittels des durch die Steuereinheit 20 entsprechend angesteuerten ersten Schaltelements 19 und/oder zweiten Schaltelements 34 eine elektrische Verbindung zwischen dem Versorgungseingang 80 und dem ersten Versorgungsausgang 81 und/oder dem zweiten Versorgungsausgang 82 hergestellt. Gleichzeitig oder auch schon vorab beginnt die Steuereinheit mit der Überwachung des Parameters ob dieser im vorgegebenen Wertebereich liegt. Somit liegt eine absichernde Funktion vor. Beim Ausschalten wird mittels des durch die Steuereinheit 20 entsprechend angesteuerten ersten Schaltelements 19 und/oder zweiten Schaltelements 34 eine elektrische Verbindung zwischen dem Versorgungseingang 80 und dem ersten Versorgungsausgang 81 und/oder dem zweiten Versorgungsausgang 82 getrennt. Anschließend beendet die Steuereinheit die Überwachung des Parameters. Alternativ kann die Überwachung auch fortgesetzt werden.

Weiterhin besteht die Möglichkeit, die Art, den Umfang und die Wertebereiche der mittels der ersten Erfassungseinrichtung 21 und/oder der zweiten Erfassungseinrichtung 36 erfassten und mittels der Steuereinheit 20 überwachten Parameter in der Steuereinheit zu hinterlegen, vorzugeben und/oder anzupassen. Somit kann die Steuereinheit 20 respektive das Sicherungsmodul 9,33,37 eingestellt werden.

Zudem besteht die Möglichkeit, das erste Schaltelement 19 und/oder das zweite Schaltelement 34 mittels der Steuereinheit 20 zurückzusetzen, also eine elektrische Verbindung zwischen dem Versorgungseingang 80 und dem ersten Versorgungsausgang 81 und/oder dem zweiten Versorgungsausgang 82 wieder herzustellen, sofern die elektrische Verbindung zuvor aufgrund der absichernden Funktion des Sicherungsmoduls oder aufgrund entsprechender Voreinstellungen getrennt wurde. Dieses Zurücksetzen kann entweder aufgrund eines entsprechenden Rücksetzsignals an die Steuereinheit 20 oder aber beispielsweise nach Ablauf einer festgelegten oder variablen Zeitspanne erfolgen. Sollte der erfasste Parameter nach dem Zurücksetzen immer noch außerhalb eines vorgegebenen Wertebereichs liegen, so würde die absichernde Funktion, wie zuvor ausführlich beschrieben, erneut ein Trennen der elektrischen Verbindung bewirken. Beim Zurücksetzen des Sicherungsmoduls 9,33,37 kann es sein, dass eine Abkühlphase des ersten Schaltelements 19 und/oder des zweiten Schaltelemets 34 abgewartet werden muss, bevor die absichernde Funktion des Sicherungsmoduls 9,33,37 wieder eingeschaltet werden kann.

Das Sicherungsmodul 37 gemäß der dritten Ausführungsform weist zwei mit der Steuereinheit 20 elektrisch verbundene und von außerhalb des Sicherungsmoduls 37 bedienbare Taster 38,39 und zwei mit der Steuereinheit 20 elektrisch verbundene und von außerhalb des Sicherungsmoduls 37 mit Daten beaufschlagbare digitale Eingänge 40,41 auf. Der Übersichtlichkeit halber sind die einzelnen Verbindungen der beiden Taster 38,39 und der beiden digitalen Eingänge 40,41 an eine Außenseite des Sicherungsmoduls 37 gemäß der dritten Ausführungsform nicht dargestellt.

Ein erster Taster 38 kann beispielsweise dazu vorgesehen sein, das Sicherungsmodul 37 manuell ein- bzw. auszuschalten, zurückzusetzen, den zu überwachenden Parameter oder Wertebereich einzustellen und/oder den zu überwachenden Parameter oder Wertebereich abzufragen. Zum Einstellen des zu überwachenden Parameters oder Wertebereichs kann das Sicherungsmodul beispielweise mittels einer durchgehenden Betätigen des ersten Tasters 38 über einen definierte Zeitraum, beispielweise über 3 Sekunden, in einen sogenannten Programmiermodus versetzt werden. Anschließend wird mittels einer definierten Abfolge von einer Mehrzahl an visuellen und/oder akustischen Signalen ein aktueller eingestellter Parameter oder Wertebereich angezeigt. Hierzu ist dem ersten Taster 38 beispielweise eine Lichtquelle zugeordnet. Ein Parameter könnte beispielsweise ein Nennstrom des Verbrauchers sein. Beispielsweise kann eine Abfolge von drei Mal Blinken - Pause - drei Mal Blinken dann bedeuten, dass ein Nennstrom von 3A als zu überwachender Parameter aktuell eingestellt ist. Um diesen nun anzupassen bzw. einzustellen, wird der erste Taster 38 so oft betätigt, bis der gewünschte zu überwachende Parameter oder Wertebereich eingestellt ist. Würde der erste Taster 38 im Programmiermodus beispielsweise fünf Mal betätigt, so wäre beispielweise ein Nennstrom von 5A als zu überwachender Parameter neu eingestellt. Entsprechend würde die Lichtquelle diese neue Einstellung dann folgendermaßen signalisieren: fünf Mal Blinken - Pause - fünf Mal Blinken. Der Programmiermodus kann durch erneutes durchgehendes Betätigen des ersten Tasters 38 über einen definierten Zeitraum, beispielweise über 3 Sekunden, verlassen werden und der neu eingestellte zu überwachende Parameter oder Wertebereich wird übernommen. Alternativ wird der Programmiermodus verlassen, wenn über einen längeren definierten Zeitraum, beispielsweise 30 Sekunden, keine Betätigung des ersten Tasters 38 erfolgt. Zum Abfragen des eingestellten zu überwachenden Parameters oder Wertebereichs kann das Sicherungsmodul beispielweise mittels einer durchgehenden Betätigung des ersten Tasters 38 über einen definierten Zeitraum, beispielweise über 3 Sekunden, in einen sogenannten Abfragemodus versetzt werden. Anschließend wird mittels einer definierten Abfolge von einer Mehrzahl an visuellen und/oder akustischen Signalen ein eingestellter Parameter oder Wertebereich angezeigt. Hierzu ist dem ersten Taster 38 beispielweise eine Lichtquelle zugeordnet. Ein Parameter könnte beispielsweise ein Nennstrom des Verbrauchers sein. Beispielsweise kann eine Abfolge von drei Mal Blinken - Pause - drei Mal Blinken dann bedeuten, dass ein Nennstrom von 3A als zu überwachender Parameter eingestellt ist. Der Abfragemodus kann durch erneutes durchgehendes Betätigen des ersten Tasters 38 über einen definierten Zeitraum, beispielweise über 3 Sekunden, verlassen werden. Alternativ wird der Abfragemodus verlassen, wenn über einen längeren definierten Zeitraum, beispielsweise 30 Sekunden, keine Betätigung des ersten Tasters 38 erfolgt.

Statt das Sicherungsmodul 37 über den ersten Taster 38 ein- bzw. auszuschalten, zurückzusetzen, den zu überwachenden Parameter oder Wertebereich einzustellen und/oder den zu überwachenden Parameter oder Wertebereich abzufragen, kann auch ein erster externer Taster oder Schalter zum Ein- bzw. Ausschalten, zum Zurücksetzen, zum Einstellen des zu überwachenden Parameters oder Wertebereichs und/oder zum Abfragen des zu überwachenden Parameters oder Wertebereichs des Sicherungsmoduls 37 vorgesehen sein, der mit einem ersten digitalen Eingang 40 datentechnisch verbunden ist. Auch eine Kombination von erstem Taster 38 und erstem externen Taster oder Schalter in Verbindung mit dem ersten digitalen Eingang 40 zum Ein- bzw. Ausschalten, zum Zurücksetzen, zum Einstellen und/oder Abfragen des Sicherungsmoduls 37 kann vorgesehen sein.

Ein zweiter Taster 39 des Sicherungsmoduls 37 kann beispielsweise alternativ oder zusätzlich dazu vorgesehen sein, das Sicherungsmodul 37 manuell ein- bzw. auszuschalten, zurückzusetzen, den zu überwachenden Parameter oder Wertebereich einzustellen und/oder den zu überwachenden Parameter oder Wertebereich abzufragen. Zum Einstellen des zu überwachenden Parameters oder Wertebereichs kann das Sicherungsmodul beispielweise mittels einer durchgehenden Betätigung des zweiten Tasters 39 über einen definierte Zeitraum, beispielweise über 3 Sekunden, in einen sogenannten Programmiermodus versetzt werden. Anschließend wird mittels einer definierten Abfolge von einer Mehrzahl an visuellen und/oder akustischen Signalen ein aktueller eingestellter Parameter oder Wertebereich angezeigt. Hierzu ist dem zweiten Taster 39 beispielweise eine Lichtquelle zugeordnet. Ein Parameter könnte beispielsweise ein Nennstrom des Verbrauchers sein. Beispielsweise kann eine Abfolge von drei Mal Blinken - Pause - drei Mal Blinken dann bedeuten, dass ein Nennstrom von 3A als zu überwachender Parameter aktuell eingestellt ist. Um diesen nun anzupassen bzw. einzustellen, wird der zweite Taster 39 so oft betätigt, bis der gewünschte zu überwachende Parameter oder Wertebereich eingestellt ist. Würde der zweite Taster 39 im Programmiermodus beispielsweise fünf Mal betätigt, so wäre beispielweise ein Nennstrom von 5A als zu überwachender Parameter neu eingestellt. Entsprechend würde die Lichtquelle diese neue Einstellung dann folgendermaßen signalisieren: fünf Mal Blinken - Pause - fünf Mal Blinken. Der Programmiermodus kann durch erneutes durchgehendes Betätigen des zweiten Tasters 39 über einen definierten Zeitraum, beispielweise über 3 Sekunden, verlassen werden und der neu eingestellte zu überwachende Parameter oder Wertebereich wird übernommen. Alternativ wird der Programmiermodus verlassen, wenn über einen längeren definierten Zeitraum, beispielsweise 30 Sekunden, keine Betätigung des zweiten Tasters 39 erfolgt. Zum Abfragen des eingestellten zu überwachenden Parameters oder Wertebereichs kann das Sicherungsmodul beispielweise mittels einer durchgehenden Betätigen des zweiten Tasters 39 über einen definierte Zeitraum, beispielweise über 3 Sekunden, in einen sogenannten Abfragemodus versetzt werden. Anschließend wird mittels einer definierten Abfolge von einer Mehrzahl an visuellen und/oder akustischen Signalen ein eingestellter Parameter oder Wertebereich angezeigt. Hierzu ist dem zweiten Taster 39 beispielweise eine Lichtquelle zugeordnet. Ein Parameter könnte beispielsweise ein Nennstrom des Verbrauchers sein. Beispielsweise kann eine Abfolge von drei Mal Blinken - Pause - drei Mal Blinken dann bedeuten, dass ein Nennstrom von 3A als zu überwachender Parameter eingestellt ist. Der Abfragemodus kann durch erneutes durchgehendes Betätigen des zweiten Tasters 39 über einen definierten Zeitraum, beispielweise über 3 Sekunden, verlassen werden. Alternativ wird der Abfragemodus verlassen, wenn über einen längeren definierten Zeitraum, beispielsweise 30 Sekunden, keine Betätigung des zweiten Tasters 39 erfolgt. In diesem Fall ist es ebenfalls möglich, einen externen zweiten Taster oder Schalter, der mit einem zweiten digitalen Eingang 41 des Sicherungsmoduls 37 verbunden ist, vorzusehen. Auch eine Kombination von zweitem Taster 39 und zweitem externen Taster oder Schalter in Verbindung mit dem zweiten digitalen Eingang 41 zum Ein- bzw. Ausschalten, zum Zurücksetzen, zum Einstellen und/oder Abfragen des Sicherungsmoduls 37 kann vorgesehen sein. Das Sicherungsmodul 37 kann auch eine Mehrzahl von Schaltelementen aufweisen. In diesem Fall kann eine entsprechende Anzahl an Tastern und/oder digitalen Eingängen vorgesehen sein.

Das Ein- bzw. Ausschalten oder Zurücksetzen oder das Einstellen oder das Abfragen des Sicherungsmoduls 37 kann jedoch auch über den Feldbus 11 erfolgen. Das Sicherungsmodul 37 kann über den Feldbus 11 beispielsweise hinsichtlich des Nennstroms oder eines Unter/- Überspannungsverhaltens parametriert werden. Das Sicherungsmodul 37 kann weiterhin auch als Anlagenüberwachungsgerät eingesetzt werden, d.h. es kann beispielsweise ein aktuell fließender elektrischer Strom, eine anliegende elektrische Spannung oder ein Ereignis angezeigt werden. Das Ereignis kann beispielsweise ein Kurzschluss, eine Überlast, eine Überspannung, eine Unterspannung oder eine Übertemperatur sein, und beispielsweise mittels am Sicherungsmodul 37 angebrachten Leuchtdioden angezeigt werden.

Zusätzlich können Einstellungen des Sicherungsmoduls 9,33,37 in einer sogenannten *Startup* Liste hinterlegt werden, die in der Anschalteinheit 12 oder in der Steuereinheit 20 gespeichert werden kann. Alternativ oder zusätzlich können die Einstellungen des Sicherungsmoduls bzw. die *Startup Liste* auch in einem anderen Feldbusmodul und/oder einer Steuerung des Feldbussystems 7 hinterlegt werden. Bei jedem Start des Feldbussystems 7 werden die hinterlegten Einstellungen geladen. Dies bietet den Vorteil, dass im Fall eines Austausches des Sicherungsmoduls 9,33,37 die hinterlegten Einstellungen automatisch übernommen werden, sodass eine erneute Parametrierung des Sicherungsmoduls 9,33,37 entfallen kann.

**Fig. 5** zeigt eine Frontansicht eines als eine Busklemme ausgebildeten Sicherungsmoduls 9,33,37 gemäß einer zweiten Ausführungsform entsprechend der Beschreibung zu Fig. 3, und eine Frontansicht eines als eine Busklemme ausgebildeten Signalmoduls 10. **Fig. 6** zeigt eine perspektivische Ansicht des als Busklemme ausgebildeten Sicherungsmoduls 33 gemäß Fig. 5. Die Merkmale der im Folgenden beschriebenen Ausführungsform des Sicherungsmoduls 33 gemäß der zweiten Ausführungsform lassen sich ohne Weiteres auf Sicherungsmodule 9 gemäß der ersten Ausführungsform, auf Sicherungsmodule 37 gemäß der dritten Ausführungsform und/oder auf beliebige andere Sicherungsmodule im Rahmen des erfinderischen Gedankens übertragen.

Die in Verbindung mit Figur 3 beschriebene Anschalteinheit, die Steuereinheit, das erste Schaltelement, das zweite Schaltelement, die erste Erfassungseinrichtung, die zweite Erfassungseinrichtung, das Versorgungsmodul, die erste Isolationsvorrichtung, die zweite Isolationsvorrichtung, die Datenleitung, die Versorgungsleitung, die Versorgungsanbindungsleitung, die Feldbusenergieleitung, die Feldbusenergieanbindungsleitung und die Betriebsenergieleitung sind in einem Gehäuse 42 angeordnet und in der Darstellung der Fig. 5 nicht zu erkennen. Das Gehäuse 42 und die darin angeordneten Elemente des Sicherungsmoduls 33 können als Überstromschutzklemme 43 bezeichnet werden. Die in Verbindung mit Figur 3 beschriebene weitere Anschalteinheit, das weitere Schaltelement und die weitere Steuereinheit sind in einem weiteren Gehäuse 44 angeordnet und in der Darstellung der Fig. 5 nicht zu erkennen. Das weitere Gehäuse 44 und die darin angeordneten Elemente des Signalmoduls 10 können als Signalklemme 45 bezeichnet werden.

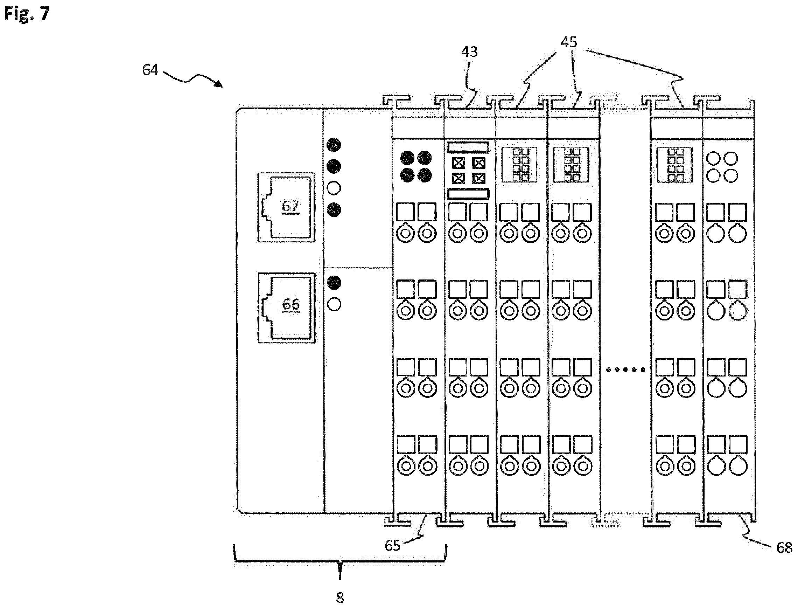

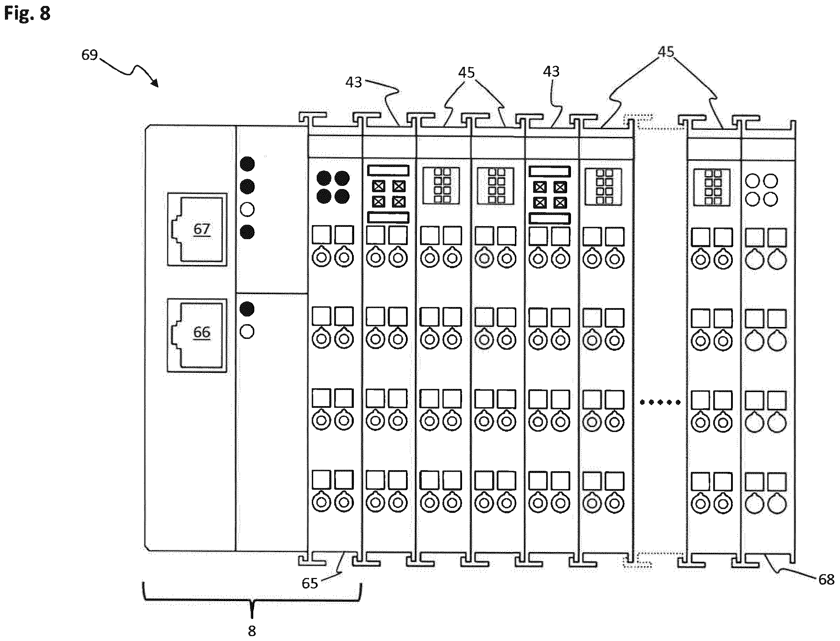

Das Gehäuse 42 der Überstromschutzklemme 43 weist eine Seitenfläche 46 auf. Das weitere Gehäuse 44 der Signalklemme 45 weist eine weitere Seitenfläche 47 auf. Die Seitenfläche 46 ist dazu ausgebildet, im montierten Zustand unmittelbar an der weiteren Seitenfläche 47 anzuliegen. Dies ist beispielweise in den Figuren 7 und 8 zu erkennen. Der erste Versorgungsausgang 81 des Sicherungsmoduls 33 zur Abgabe einer abgesicherten Versorgungsspannung ist an der Seitenfläche 46 als Kontaktstruktur 48 ausgebildet. Zusätzlich ist an der Seitenfläche eine zweite Kontaktstruktur 97 ausgebildet, die beispielsweise einen Minuspfad bzw. 0V-Pfad bzw. Massepfad der Versorgungsspannung bildet. Der weitere Versorgungseingang 85 der Signalklemme 45 ist als weitere Kontaktstruktur 49 an der weiteren Seitenfläche 47 ausgebildet. Die Kontaktstruktur 48 ist dazu ausgebildet, zur Weiterleitung der abgesicherten Versorgungsenergie an die Signalklemme 45 unmittelbar an der weiteren Kontaktstruktur 49 anzuliegen. Diese Ausbildung der Kontaktstrukturen gilt analog für die zweite Kontaktstruktur 97 und eine korrespondierend an der Signalklemme 45 ausgebildete dritte Kontaktstruktur 98. Dadurch ist das Sicherungsmodul 33 bzw. die Überstromschutzklemme 43 an das Signalmodul 10 bzw. die Signalklemme 45 anreihbar. Die Überstromschutzklemme 43 und die Signalklemme 45 können also zu einem Klemmenverbund angereiht werden.

Im dargestellten Beispiel der Fig. 5 sind die Kontaktstruktur 48 und die zweite Kontaktstruktur 97 in Form von zwei Nuten ausgebildet, während die weitere Kontaktstruktur 49 und die dritte Kontaktstruktur 98 als zwei den Nuten korrespondierende Federn ausgebildet sind. Es ist jedoch nicht notwendig, dass die Kontaktstruktur 48, die zweite Kontaktstruktur 97, die weitere Kontaktstruktur 49 und die dritte Kontaktstruktur 98 nach dem Feder/Nut-Prinzip ausgebildet sind. Die Kontaktstruktur 48, die zweite Kontaktstruktur 97, die weitere Kontaktstruktur 49 und die dritte Kontaktstruktur 98 können beispielsweise auch als plane elektrische Kontakte ausgebildet sein, die dazu ausgebildet sind, aneinander anzuliegen, um die abgesicherte Versorgungsenergie an den Verbraucher weiterzuleiten.

Die Signalklemme 45 weist an einer der weiteren Seitenfläche 47 gegenüberliegenden dritten Seitenfläche 79 eine zusätzliche Kontaktstruktur 50 auf, die in Form von zwei Nuten ausgebildet ist. Auf diese Weise kann die abgesicherte Versorgungsenergie an weitere Signalklemmen weitergeleitet werden. Die nach dem Feder/Nut-Prinzip ausgebildeten Kontaktstrukturen 48,49,50,97,98 können auch als Powerkontakte bezeichnet werden. Die Powerkontakte ermöglichen es, dass eine separate Kabelverdrahtung zum Weiterleiten der Versorgungsenergie entfallen kann.

Das Gehäuse 42 weist eine quer zu der Seitenfläche 46 verlaufend ausgebildete Frontseite 51 auf. An der Frontseite 51 sind zwei erste Kontaktelemente 90 ausgebildet, die durch Einstecken eines Kabels eine elektrische Kontaktierung des Sicherungsmoduls 33 ermöglichen. Die beiden ersten Kontaktelemente 90 sind elektrisch leitend miteinander verbunden, so dass bei der Verkabelung der Überstromschutzklemme 43 ein beliebiges erstes Kontaktelement 90 verwendet werden kann. Die ersten Kontaktelemente 90 bilden somit den Versorgungseingang 80 zur Einspeisung einer Versorgungsenergie in das Sicherungsmodul 33.

Weiterhin sind an der Frontseite zwei zweite Kontaktelemente 93 ausgebildet, die durch Einstecken eines Kabels eine elektrische Kontaktierung des Sicherungsmoduls 33 ermöglichen. Die beiden zweiten Kontaktelemente 90 sind elektrisch leitend miteinander verbunden, so dass bei der Verkabelung der Überstromschutzklemme 43 ein beliebiges zweites Kontaktelement 93 verwendet werden kann. Die beiden zweiten Kontaktelemente bilden beispielsweise den Minuspfad bzw. 0V-Pfad bzw. Massepfad der Versorgungsspannung.

Des Weiteren ist an der Frontseite 51 ein drittes Kontaktelement 54 ausgebildet, welches den ersten Versorgungsausgang 81 für die abgesicherte Versorgungsspannung bildet. Die Kontaktstruktur 48 und das dritte Kontaktelement 54 sind innerhalb des Gehäuses 42 elektrisch miteinander verbunden, so dass ein Anwender beliebig wählen kann, welche Art von erstem Versorgungsausgang 81 er für seine Anwendung nutzen will.

Zusätzlich ist an der Frontseite 51 ein viertes Kontaktelement 52 ausgebildet, welches den zweiten Versorgungsausgang 82 für die abgesicherte Versorgungsspannung bildet.
Ein fünftes Kontaktelement 56 an der Frontseite 51 bildet einen ersten digitalen Eingang 40 für das Sicherungsmodul 33. Der erste externe Taster kann beispielsweise mittels einer Verkabelung datentechnisch mit dem fünften Kontaktelement 56 verbunden werden und so, wie beschrieben, zum Beispiel das Sicherungsmodul 33 bzw. die absichernde Funktion für den ersten Versorgungsausgang 81 zurücksetzen.

Ein sechstes Kontaktelement 57 an der Frontseite 51 bildet den zweiten digitalen Eingang 41 für das Sicherungsmodul 33. Der zweite externe Taster kann beispielsweise mittels einer Verkabelung datentechnisch mit dem sechsten Kontaktelement 57 verbunden werden und so, wie beschrieben, zum Beispiel das Sicherungsmodul 33 bzw. die absichernde Funktion für den zweiten Versorgungsausgang 82 zurücksetzen.

Die elektrische Verbindung und mechanische Fixierung der beschriebenen Kabel in den einzelnen ersten bis sechsten Kontaktelementen 52, 54, 56, 57, 90, 93 erfolgt beispielsweise mittels einer jeweils in den einzelnen ersten bis sechsten Kontaktelementen 52, 54, 56, 57, 90, 93 ausgebildeten Federkraftklemme bzw. Zugfederklemme, die auch als Cage Clamp bezeichnet wird.

Über den ersten bis sechsten Kontaktelementen 52, 54, 56, 57, 90, 93 ist jeweils eine Öffnung 53 ausgebildet. Die Öffnung 53 ist dazu vorgesehen, ein Werkzeug, beispielsweise einen Schraubenzieher, aufzunehmen. Damit kann die Verkabelung von dem jeweiligen ersten bis sechsten Kontaktelement 52, 54, 56, 57, 90, 93 bzw. der jeweiligen Federkraftklemme gelöst werden.

Die Überstromschutzklemme 43 weist an ihrer Frontseite 51 die zwei im Zusammenhang mit Figur 4 ausführlich beschriebenen Taster 38, 39 zum Ein- bzw. Ausschalten, zum Zurücksetzen und/oder zum Einstellen auf. Ebenso sind an der Frontseite 51 Leuchtdioden 55 zur Anzeige von Informationen oder Ereignissen ausgebildet. So kann beispielsweise eine Leuchtdiode 55 den Schaltzustand des ersten oder zweiten Schaltelements farblich codiert visualisieren. Alternativ kann es auch vorgesehen sein, dass einer oder beide der beschriebenen Taster 38, 39 als Leucht-Taster mit integriertem Leuchtmittel, beispielsweise einer LED, ausgebildet ist bzw. sind. Derartige Taster werden auch als LED-Taster bezeichnet. Sofern die in Zusammenhang mit Figur 4 beschriebenen Taster 38, 39 als LED-Taster ausgebildet sind, können Informationen oder Ereignisse auch mittels der LED-Taster angezeigt werden. So kann beispielsweise der erste LED-Taster 38 und/oder der zweite LED-Taster 39 den Schaltzustand des ersten oder zweiten Schaltelements farblich codiert visualisieren. In diesem Fall können dann die Leuchtdioden 55 zur Anzeige weiterer bzw. anderer Informationen oder Ereignisses ausgebildet sein. Dies könnte beispielweise ein Status der Feldbuskommunikation sein.

An einer der Seitenfläche 46 gegenüberliegenden zweiten Seitenfläche 70 sind in einem oberen Bereich sechs Kontaktstifte 71, 72, 73, 74, 75, 76 ausgebildet. Ein erster Kontaktstift 71 bildet den Feldbusenergieeingang 5 und ein zweiter Kontaktstift 72 bildet einen Minuspfad bzw. 0V-Pfad bzw. Massepfad der Feldbusenergieversorgung des Feldbusses 11. Ein dritter Kontaktstift 73, ein vierter Kontaktstift 74, ein fünfter Kontaktstift 75 und ein sechster Kontaktstift 76 dienen zur datentechnischen Kontaktierung des Sicherungsmoduls 33 und bilden vier einzelne Ein- bzw. Ausgangskanäle des insgesamt als Kommunikationskanal 14, 141, 142 bezeichneten Teils des Feldbusses 11.

An der Seitenfläche 46 sind in zu den ersten bis sechsten Kontaktstiften 71, 72, 73, 74, 75, 76 korrespondierender Anordnung sechs Federkontakte 60, 61, 62, 63, 77, 78 ausgebildet. Ein erster Federkontakt 60 bildet den Feldbusenergieausgang 6 und ein zweiter Federkontakt 61 bildet den Minuspfad bzw. 0V-Pfad bzw. Massepfad der Feldbusenergieversorgung des Feldbusses 11. Ein dritter Federkontakt 62, ein vierter Federkontakt 63, ein fünfter Federkontakt 77 und ein sechster Federkontakt 78 dienen ebenfalls zur datentechnischen Kontaktierung des Sicherungsmoduls 33 und bilden vier einzelne Ein- bzw. Ausgangskanäle des insgesamt als Kommunikationskanal 14, 141, 142 bezeichneten Teils des Feldbusses 11.

Die weitere Seitenfläche 47 der Signalklemme 45 ist in Bezug auf die Ausbildung der ersten bis sechsten Kontaktstifte 71, 72, 73, 74, 75, 76 analog zu der zweiten Seitenfläche 70 der Überstromschutzklemme 43 ausgebildet. Somit kontaktiert der erste Kontaktstift 71 der Signalklemme 45 den ersten Federkontakt 60 der Überstromschutzklemme 43. Der zweite Kontaktstift 72 der Signalklemme 45 kontaktiert den zweiten Federkontakt 61 der Überstromschutzklemme 43. Der dritte Kontaktstift 73 der Signalklemme 45 kontaktiert den dritten Federkontakt 62 der Überstromschutzklemme 43. Der vierte Kontaktstift 74 der Signalklemme 45 kontaktiert den vierten Federkontakt 63 der Überstromschutzklemme 43. Der fünfte Kontaktstift 75 der Signalklemme 45 kontaktiert den fünften Federkontakt 77 der Überstromschutzklemme 43. Und der sechste Kontaktstift 76 der Signalklemme 45 kontaktiert den sechsten Federkontakt 78 der Überstromschutzklemme 43. Insgesamt wird somit ein durchgehender Feldbus 11 bereitgestellt.

Die der weiteren Seite 47 gegenüberliegende dritte Seite 79 der Signalklemme 45 ist in Bezug auf die Ausbildung der ersten bis sechsten Federkontakte 60, 61, 62, 63, 77, 78 analog zu der Seitenfläche 46 der Überstromschutzklemme 43 ausgebildet. Der erste Federkontakt 60 bildet einen Feldbusenergieausgang und der zweite Federkontakt 61 bildet einen Minuspfad bzw. 0V-Pfad bzw. Massepfad der Feldbusenergieversorgung des Feldbusses 11 der Signalklemme 45. Der dritte Federkontakt 62, der vierte Federkontakt 63, der fünfte Federkontakt 77 und der sechste Federkontakt 78 dienen ebenfalls zur datentechnischen Kontaktierung der Signalklemme 45 und bilden vier einzelne Ein- bzw. Ausgangskanäle des insgesamt als Kommunikationskanal 14, 141, 142 bezeichneten Teils des Feldbusses 11.

Das weitere Gehäuse 44 der Signalklemme 45 weist eine quer zu der weiteren Seitenfläche 47 ausgebildete weitere Frontseite 58 auf. An der weiteren Frontseite 58 ist ein siebtes Kontaktelement 100 ausgebildet. Durch Einstecken eines Kabels wird mittels des siebten Kontaktelements 100 eine elektrische Verbindung zum Verbraucher hergestellt, so dass das siebte Kontaktelement 100 den weiteren Versorgungsausgang 86 der Signalklemme 45 bildet, um den Verbraucher mit der abgesicherten Versorgungsenergie bzw. abgesicherten Versorgungsspannung zu versorgen.

Weiterhin sind an der weiteren Frontseite 58 ein achtes Kontaktelement 101, ein neuntes Kontaktelement 103 und ein zehntes Kontaktelement 104 ausgebildet. Diese weiteren drei Kontaktelemente können weitere drei Versorgungsausgänge der Signalklemme 45 bilden, um weitere drei Verbraucher jeweils mit der abgesicherten Versorgungsspannung zu versorgen. Zusätzlich sind an der weiteren Frontseite 58 vier elfte Kontaktelemente 102 ausgebildet. Durch jeweiliges Einstecken eines Kabels ermöglichen die vier elften Kontaktelemente 102 eine elektrische Kontaktierung von dem Verbraucher und den drei weiteren Verbrauchern. Die vier elften Kontaktelemente 102 bilden beispielweise für den jeweiligen Verbraucher den Minuspfad bzw. 0V-Pfad bzw. Massepfad der Versorgungsspannung.

Die elektrische Verbindung und mechanische Fixierung der beschriebenen Kabel in den einzelnen siebten bis elften Kontaktelementen 100, 101, 102, 103, 104 erfolgt ebenfalls beispielsweise mittels einer jeweils in den einzelnen siebten bis elften Kontaktelementen 100, 101, 102, 103, 104 ausgebildeten Federkraftklemme bzw. Zugfederklemme, die auch als Cage Clamp bezeichnet wird.

Über den siebten bis elften Kontaktelementen 100, 101, 102, 103, 104 ist ebenfalls jeweils eine Öffnung 53 ausgebildet. Die Öffnung 53 ist dazu vorgesehen, ein Werkzeug, beispielsweise einen Schraubenzieher, aufzunehmen. Damit kann die Verkabelung von dem jeweiligen siebten bis elften Kontaktelementen 100, 101, 102, 103, 104 bzw. der jeweiligen Federkraftklemme gelöst werden.

An der weiteren Frontseite 58 der Signalklemme 45 können zusätzliche Taster und/oder Leuchtdioden 59 zur Anzeige von Informationen ausgebildet sein, wie dies in Fig. 5 angedeutet ist.

**Fig.** 7 zeigt einen Verbund 64 mit einer Überstromschutzklemme 43 und einer Mehrzahl von Signalklemmen 45.

Die Überstromschutzklemme 43 ist über die oben ausführlich beschriebenen Powerkontakte bzw. Kontaktstrukturen, die Kontaktstifte und die Federkontakte elektrisch und datentechnisch an eine Signalklemme 45 angeschlossen. An die mit der Überstromschutzklemme 43 verbundene Signalklemme 45 ist eine Mehrzahl weiterer Signalklemmen 45 ebenfalls über Powerkontakte bzw. Kontaktstrukturen, Kontaktstifte und Federkontakte angereiht. Die Mehrzahl der Signalklemmen 45 ist dazu ausgebildet, eine Mehrzahl von Verbrauchern zu steuern.

Die Überstromschutzklemme 43 ist mit dem übergeordneten Feldbusteilnehmer 8 verbunden. Der übergeordnete Feldbusteilnehmer 8 weist eine Anfangsklemme 65 auf. Die Anfangsklemme 65 weist an ihrer der Überstromschutzklemme 43 zugewandten Seitenfläche erste bis sechste Federkontakte auf, wie sie zu Figur 5 beschrieben wurden. Somit kann der Kommunikationskanal 14, 141, 142 und ein Feldbusenergiekanal des Feldbusses zwischen der Anfangsklemme 65 und der Überstromschutzklemme 43 ausgebildet werden. Die Anfangsklemme 65 ist beispielsweise dazu ausgebildet, den übergeordneten Feldbusteilnehmer 8 mit elektrischer Energie zu versorgen. Der übergeordnete Feldbusteilnehmer 8 weist zwei Steckplätze 66,67 für Feldbuskabel auf. Die Feldbuskabel können beispielsweise Kabel mit RJ-45-Steckern sein. Ein Steckplatz 66 kann beispielsweise für den Kommunikationskanal 14, 141, 142 vorgesehen sein, während ein weiterer Steckplatz 67 für einen weiteren Kommunikationskanal vorgesehen sein kann. Die Feldbuskabel können mit einem Steuerungsrechner verbunden werden.

Der Verbund 64 der Klemmen schließt mit einer Endklemme 68 ab. Die Endklemme 68 ist beispielsweise dazu ausgebildet, den Kommunikationskanal 14, 141, 142 als weiteren Kommunikationskanal wieder zurück zu führen. Alternativ kann auf die Endklemme 68 auch verzichtet werden, sofern die letzte Busklemme im Verbund entsprechend ausgebildet ist, den Kommunikationskanal 14, 141, 142 als weiteren Kommunikationskanal wieder zurück zu führen. In diesem Fall könnte der Verbund 64 Klemmen mit einer Schutzkappe für gegebenenfalls freiliegende Kontaktstrukturen abschließen.

**Fig. 8** zeigt einen weiteren Verbund 69 mit zwei Überstromschutzklemmen 43 und einer Mehrzahl von Signalklemmen 45.

Im Unterschied zum in der Fig. 7 dargestellten Verbund 64, weist der in der Fig. 8 dargestellte weitere Verbund 69 eine weitere Überstromschutzklemme 43 auf, die wie die Überstromschutzklemme 43 ausgebildet ist. Zwischen der Überstromschutzklemme 43 und der weiteren Überstromschutzklemme 43 sind beispielhaft zwei Signalklemmen 45 angereiht. Die weitere Überstromschutzklemme 43 kann erforderlich sein, falls die über die zwischen den Überstromschutzklemmen 43 angeordneten zwei Signalklemmen 45 an das Feldbussystem 7 angeschlossenen Verbraucher eine maximal zur Verfügung stehende abgesicherte Versorgungsenergie verbrauchen. In diesem Fall ist es zweckmäßig die weitere Überstromschutzklemme 43 im Verbund 69 anzuordnen, denn auf diese Weise kann eine weitere Versorgungsenergie eingespeist und abgesichert werden, die an zusätzliche Verbraucher als abgesicherte Versorgungsenergie weitergeleitet werden kann.

Es ist auch möglich, beide Überstromschutzklemmen 43 zeitversetzt einzuschalten. Hierzu gibt es zwei Möglichkeiten. Die erste Möglichkeit eines zeitversetzten Einschaltens der Überstromschutzklemmen 43 besteht darin, dass beim Anlegen der Versorgungsenergie die Überstromschutzklemme 43 eine Zufallszahl zwischen 0 und 49 generiert. Das Ergebnis wird dann zum Einschalten des ersten Versorgungsausgangs der Überstromschutzklemme 43 verwendet. Beträgt das Ergebnis beispielsweise 10, so wird der erste Versorgungsausgang 10ms verspätet eingeschaltet. Der zweite Versorgungsausgang der Überstromschutzklemme 43 wird nun stets 50ms nach dem Einschalten des ersten Versorgungsausgangs eingeschaltet. Die weitere Überstromschutzklemme 43 wird eine weitere Zufallszahl generieren, die sich in der Regel von der Zufallszahl unterscheidet, sodass der erste Versorgungsausgang der weiteren Überstromschutzklemme 43 zeitversetzt zum ersten Versorgungsausgang der Überstromschutzklemme 43 eingeschaltet werden kann, wobei der zweite Versorgungsausgang der weiteren Überstromschutzklemme 43 erneut 50ms nach dem Einschalten des ersten Versorgungsausgangs der weiteren Überstromschutzklemme 43 eingeschaltet wird.

Die zweite Möglichkeit eines zeitversetzten Einschaltens der Überstromschutzklemmen 43 besteht darin, dass in den Steuereinheiten 20 zweier unterschiedlicher Überstromschutzklemmen 43 hinterlegte und für die jeweilige Steuereinheit 20 einzigartige Identifikationsnummern verwendet werden, um eine Zahl zwischen 0 und 49 zu generieren. Beispielweise handelt es sich um eine 96-Bit breite einzigartige Identifikationsnummer. Die generierten Zahlen werden als Einschaltzeit in ms zum Einschalten der ersten Versorgungsausgänge der Überstromschutzklemmen 43 verwendet. Die zweiten Versorgungsausgänge werden stets 50ms nach dem Einschalten der jeweiligen ersten Versorgungsausgänge eingeschaltet. Der Vorteil dieser Methode besteht darin, dass eine Überstromschutzklemme 43 stets die gleiche Zahl generiert, sodass ein eventuelles Einschaltproblem gut reproduziert werden kann, was eine Fehlersuche vereinfachen kann.

In einer nicht dargestellten Ausführungsform eines Sicherungsmoduls 9, 33, 37 können mehrere seriell verschaltete Schaltelemente zwischen einem Versorgungseingang 80 und einem Versorgungsausgang 81, 82 ausgebildet sein. Jedes seriell verschaltete Schaltelement kann beispielsweise unabhängig von der Steuereinheit 20 angesteuert werden. Dadurch ist es vorteilhafterweise möglich, den ersten Versorgungsausgang 81 und/oder den zweiten Versorgungsausgang 82 redundant abzusichern.

In einer nicht dargestellten Ausführungsform eines Sicherungsmoduls 9, 33, 37 können mehrere seriell verschaltete Erfassungseinrichtungen zwischen einem Versorgungseingang 80 und einem Versorgungsausgang 81, 82 ausgebildet sein. Jede seriell verschaltete Erfassungseinrichtung ist beispielsweise dazu ausgebildet, einen Parameter der Versorgungsenergie und/oder einen Parameter der abgesicherten Versorgungsenergie zu erfassen. Dadurch ist es vorteilhafterweise möglich, einen Parameter der Versorgungsenergie und/oder einen Parameter der abgesicherten Versorgungsenergie mehrkanalig durch die Steuereinheit 20 des Sicherungsmoduls 9, 33, 37 zu überwachen.

In einer nicht dargestellten Ausführungsform eines Sicherungsmoduls 9, 33, 37 kann die Steuereinheit 20 des Sicherungsmoduls 9, 33, 37 über einen Feldbus 11 parametriert werden. Beispielsweise kann eine das Abschaltverhalten beschreibende Kennlinie des Sicherungsmoduls 9, 33, 37 über den Feldbus 11 eingestellt und/oder verändert werden. Die Parametrierung kann zum Beispiel über eine am Feldbus 11 angeschlossene speicherprogrammierbare Steuerung erfolgen. Dies ermöglicht vorteilhafterweise eine einfache Inbetriebnahme.

In einer weiteren nicht dargestellten Ausführungsform eines Sicherungsmoduls 9, 33, 37 sind standardmäßig beziehungsweise werkseitig zumindest mehrere das Abschaltverhalten eines Sicherungsmoduls 9, 33, 37 beschreibende Kennlinien in einem Sicherungsmoduls 9, 33, 37 abgespeichert, wobei die Kennlinien sich voneinander unterscheiden und ein Anwender somit ohne größeren Zeitaufwand ein gewünschtes Abschaltverhalten des Sicherungsmoduls 9, 33, 37 mittels der standardmäßigen Kennlinien einstellen kann. Eine Einstellung einer das Abschaltverhalten eines Sicherungsmoduls 9, 33, 37 beschreibende Kennlinie kann hierbei beispielsweise über die Taster 38, 39 oder über einen Feldbus 11 erfolgen.

In einer weiteren nicht dargestellten Ausführungsform eines Sicherungsmoduls 9, 33, 37 sind der erste Versorgungsausgang 81 und/oder der zweite Versorgungsausgang 82 mittels eines Verpolungsschutzes geschützt. Somit ist es möglich, dass die Komponenten des Sicherungsmoduls 9, 33, 37 vor einem falschen Anschließen eines Verbrauchers und den dadurch entstehenden elektrischen Ströme geschützt sind.

In einer weiteren nicht dargestellten Ausführungsform eines Sicherungsmoduls 9, 33, 37 weist der erste Versorgungsausgang 81 und/oder der zweite Versorgungsausgang 82 eine Rückspeiseschutzeinrichtung auf. Die Rückspeiseschutzeinrichtung verhindert, dass ein elektrischer Strom nicht von dem ersten Versorgungsausgang 81 und/oder dem zweiten Versorgungsausgang 82 zum Versorgungseingang 80 fließen kann. Somit sind weitere elektrische Vorrichtungen, welche elektrisch an dem Versorgungseingang 80 angeschlossen sind, geschützt. Es ist ebenso möglich, dass die Rückspeiseschutzeinrichtung in der ersten Erfassungseinrichtung 21 und/oder im ersten Schaltelement 19 und/oder in der zweiten Erfassungseinrichtung 36 und/oder im zweiten Schaltelement 34 implementiert ist.

In einer nicht dargestellten Ausführungsform des Sicherungsmoduls 9, 33, 37 können die die Absicherung des ersten Versorgungsausgangs 81 oder des zweiten Versorgungsausgangs 82 betreffende Informationen, insbesondere eine von der ersten Erfassungseinrichtung 21 oder von der zweiten Erfassungseinheit 36 erfasste elektrische Spannung, ein erfasster elektrischer Strom, eine erfasste zeitliche Entwicklung der elektrischen Spannung oder des elektrischen Stroms, eine von der Steuereinheit 20 überwachte Zeitdauer, innerhalb derer das erste Schaltelement 19 oder das zweite Schaltelement 34 einen elektrischen Strom begrenzt, in einer in der Steuereinheit 20 integrierten Speichereinheit gespeichert werden. Der die Absicherung des ersten Versorgungsausgangs 81 oder des zweiten Versorgungsausgangs 82 betreffende Information kann bei der Speicherung ein Zeitstempel hinzugefügt werden. Dadurch ist eine genauere Zustandsüberwachung durch eine an den Feldbus 11 angeschlossene speicherprogrammierbare Steuerung vorteilhafterweise möglich.

In einer nicht dargestellten Ausführungsform des Sicherungsmoduls 9, 33, 37 weist das Sicherungsmodul 9, 33, 37 eine Vorwarnfunktion aus. Wenn beispielsweise ein von der ersten oder zweiten Erfassungseinrichtung 21, 36 erfasster elektrischer Strom einen vorher bestimmten prozentualen Wert eines eingestellten Nennstroms überschreitet, wird dieses Überschreiten im Rahmen der Vorwarnfunktion mittels eines visuellen Signals visualisiert. Dieses Ereignis, das Überschreiten, kann auch als eine die Absicherung des ersten Versorgungsausgangs 81 oder des zweiten Versorgungsausgangs 82 betreffenden Information an den Feldbusteilnehmer 8 übermittelt werden.

In einer weiteren nicht dargestellten Ausführungsform des Sicherungsmoduls 9, 33, 37 können eingetretene Ereignisse, wie zum Beispiel das Überschreiten eines bestimmten von der ersten oder zweiten Erfassungseinrichtung 21, 36 erfassten elektrischen Stroms, von der Steuereinheit 20 gezählt werden. Dadurch ist es vorteilhafterweise möglich, eine genaue Anzahl von bestimmten Ereignissen ohne größeren Zeitaufwand zu bestimmen. Dies ermöglicht vorteilhafterweise eine einfache Zustandsüberwachung. Beispielsweise kann eine stark schwankende Stromaufnahme eines angeschlossenen Verbrauchers somit relativ einfach festgestellt werden.

In einer nicht dargestellten Ausführungsform des Sicherungsmoduls 9, 33, 37 werden die die Absicherung des ersten Versorgungsausgangs 81 oder des zweiten Versorgungsausgangs 82 betreffenden Informationen, insbesondere ein vorgegebener Wertebereich einer elektrischen Spannung, eines elektrischen Stroms, einer zeitlichen Entwicklung der elektrischen Spannung oder des elektrischen Stroms oder einer Zeitdauer, innerhalb derer das erste Schaltelement 19 oder das zweite Schaltelement 34 einen elektrischen Strom begrenzt, in einem anderen Feldbusteilnehmer 8 gespeichert. Der andere Feldbusteilnehmer 8 kann hierbei insbesondere eine speicherprogrammierbare Steuerung sein, welche beispielsweise eine Maschine applikationsspezifisch steuert. Wenn ein Sicherungsmodul 9, 33, 37 beispielsweise wegen eines Defekts ausgetauscht werden muss, können beispielsweise die die Absicherung des ersten Versorgungsausgangs 81 oder des zweiten Versorgungsausgangs 82 betreffenden Informationen von der speicherprogrammierbaren Steuerung auf ein ausgetauschtes Sicherungsmodul 9, 33, 37 mittels des Feldbusses 11 übermittelt werden. Dadurch ist vorteilhafterweise eine relativ schnelle Wiederherstellung der zuvor eingestellten Wertebereiche möglich.

In einer weiteren nicht dargestellten Ausführungsform des Sicherungsmoduls 9, 33, 37 können die die Absicherung des ersten Versorgungsausgangs 81 oder des zweiten Versorgungsausgangs 82 betreffenden Informationen in der Steuereinheit 20 passwortgeschützt gespeichert werden. Vorzugsweise sind die passwortgeschützten Informationen verschlüsselt abgespeichert. Durch den Passwortschutz sind vorteilhafterweise die die Absicherung des ersten Versorgungsausgangs 81 oder des zweiten Versorgungsausgangs 82 betreffenden Informationen gegen eine Veränderung durch Unbefugte geschützt.

In einer nicht dargestellten Ausführungsform des Sicherungsmoduls 9, 33, 37 können die mit der Steuereinheit 20 verbundenen Taster 38, 39 deaktiviert beziehungsweise aktiviert werden. Wenn die mit der Steuereinheit 20 verbundenen Taster 38, 39 deaktiviert sind, kann vorteilhafterweise eine unbeabsichtigte Veränderung der Einstellungen des Sicherungsmoduls 9, 33, 37 verhindert werden.

In einer weiteren nicht dargestellten Ausführungsform des Sicherungsmoduls 9, 33, 37 steuert die Steuereinheit 20 das erste Schaltelement 19 oder das zweite Schaltelement 34 automatisch an, um den Versorgungseingang 80 elektrisch mit dem ersten Versorgungsausgang 81 oder dem zweiten Versorgungsausgang 82 in regelmäßigen Zeitintervallen zu verbinden. Nach jedem elektrischen Verbinden des Versorgungseingang 80 mit dem ersten Versorgungsausgang 81 oder dem zweiten Versorgungsausgang 82 überwacht die Steuereinheit 20 mittels der ersten Erfassungseinrichtung 21 oder der zweiten Erfassungseinrichtung 36 einen Parameter der Versorgungsenergie und/oder einen Parameter der abgesicherten Versorgungsenergie. Wenn der überwachte Parameter der Versorgungsenergie und/oder Parameter der abgesicherten Versorgungsenergie über einem vorgegebenen Wertebereich liegt, steuert die Steuereinheit 20 das erste Schaltelement 19 oder das zweite Schaltelement 34 wieder an, um den Versorgungseingang 80 elektrisch von dem ersten Versorgungsausgang 81 oder dem zweiten Versorgungsausgang 82 zu trennen. Somit ist ein automatisches Instandsetzen mithilfe des Sicherungsmoduls 9, 33, 37 vorteilhafterweise möglich.

In einer nicht dargestellten Ausführungsform des Sicherungsmoduls 9, 33, 37 kann der an den ersten Versorgungsausgang 81 angeschlossene und mittels des Signalmoduls 10 an das Feldbussystem 7 angeschlossene Verbraucher 3 oder der an den zweiten Versorgungsausgang 82 angeschlossene weitere Verbraucher 35 ein Aktor, wie zum Beispiel ein Ventil oder elektrischer Motor, insbesondere ein Gleichstrommotor, ein Sensor, wie beispielsweise ein Drucksensor oder ein Temperatursensor, ein Feldbuskoppler, eine elektrische Leitung und/oder eine andere in der Industrieautomatisierungstechnik bekannte kapazitive oder induktive Last sein.

Die vorliegende Erfindung wurde anhand der bevorzugten Ausführungsbeispiele näher illustriert und beschrieben. Dennoch ist die Erfindung nicht auf die offenbarten Beispiele beschränkt. Vielmehr können hieraus andere Variationen vom Fachmann abgeleitet werden, ohne den durch die Ansprüche definierten Schutzumfang der Erfindung zu verlassen.

## Patentansprüche

1. Sicherungsmodul (9,37) für ein Feldbussystem (7) mit einer Anschalteinheit (12), einer Steuereinheit (20), einem zum Einspeisen einer Versorgungsenergie in das Sicherungsmodul (9,37) ausgebildeten Versorgungseingang (80), einem zum Weiterleiten der Versorgungsenergie als eine abgesicherte Versorgungsenergie an einen Verbraucher (3) ausgebildeten ersten Versorgungsausgang (81), einem zum elektrischen Verbinden oder zum elektrischen Trennen des Versorgungseingangs (80) und des ersten Versorgungsausgangs (81) ausgebildeten ersten Schaltelement (19) und einem zur Bereitstellung einer Betriebsenergie über eine Betriebsenergieversorgungsleitung (92) für einen Betrieb der Steuereinheit (20) ausgebildeten Versorgungsmodul (26),
wobei ein Feldbusenergieeingang (5) zum Einspeisen einer Feldbusenergie in das Sicherungsmodul (9,37) zum Betrieb der Anschalteinheit (12) ausgebildet ist,
wobei die Anschalteinheit (12) über eine Datenleitung (24) mit der Steuereinheit (20) verbunden und zur Anbindung des Sicherungsmoduls (9,37) an einen Feldbusteilnehmer (8) mittels eines Feldbusses (11) ausgebildet ist, wodurch ein Austausch von Feldbusdaten zwischen der Steuereinheit (20) und dem Feldbusteilnehmer (8) ermöglicht wird, und
wobei die Steuereinheit (20) mit dem ersten Schaltelement (19) verbunden und dazu ausgebildet ist, das Weiterleiten der Versorgungsenergie als abgesicherte Versorgungsenergie über den ersten Versorgungsausgang (81) durch ein Ansteuern des ersten Schaltelements (19) abzusichern.
**dadurch gekennzeichnet, dass**
das Versorgungsmodul (26) mittels einer Versorgungsleitung (18) und einer Versorgungsanbindungsleitung (181) mit dem Versorgungseingang (80) und mittels einer Feldbusenergieleitung (15) und einer Feldbusenergieanbindungsleitung (110) mit dem Feldbusenergieeingang (5) elektrisch verbunden ist,
wobei das Versorgungsmodul (26) dazu ausgebildet ist, die Betriebsenergie entweder aus der Versorgungsenergie oder aus der Feldbusenergie zu generieren.

2. Sicherungsmodul (9,37) gemäß Anspruch 1,
wobei das Versorgungsmodul (26) dazu ausgebildet ist, die Betriebsenergie aus der Feldbusenergie zu generieren, falls die Versorgungsenergie außerhalb eines vorgegebenen Versorgungsenergiewertebereichs liegt.

3. Sicherungsmodul (9,37) gemäß Anspruch 1 oder 2,
wobei die Steuereinheit (20) dazu ausgebildet ist, im Rahmen der Absicherung des ersten Versorgungsausgangs (81) einen Parameter der Versorgungsenergie und/oder einen Parameter der abgesicherten Versorgungsenergie mittels einer mit der Steuereinheit (20) verbundenen ersten Erfassungseinrichtung (21) zu überwachen,
wobei die Steuereinheit (20) dazu ausgebildet ist, den Versorgungseingang (80) und den ersten Versorgungsausgang (81) im Rahmen der Absicherung mittels des ersten Schaltelements (19) elektrisch voneinander zu trennen, sobald der überwachte Parameter außerhalb eines vorgegebenen Wertebereichs liegt.

4. Sicherungsmodul (9,37) gemäß einem der vorhergehenden Ansprüche,
wobei die Steuereinheit (20) dazu ausgebildet ist, eine die Absicherung des ersten Versorgungsausgangs (81) betreffende Information mittels der Feldbusdaten über die Anschalteinheit (12) mit dem Feldbusteilnehmer (8) auszutauschen.

5. Sicherungsmodul (9,37) gemäß Anspruch 4,
wobei die Steuereinheit (20) dazu ausgebildet ist, die die Absicherung betreffende Information an den Feldbusteilnehmer (8) zu übermitteln,
wobei die die Absicherung des ersten Versorgungsausgangs (81) betreffende Information eine von der ersten Erfassungseinrichtung (21) erfasste elektrische Spannung, ein erfasster elektrischer Strom, eine erfasste zeitliche Entwicklung der elektrischen Spannung oder des elektrischen Stroms, ein erfasster Schaltzustand des ersten Schaltelements (19) oder eine von der Steuereinheit (20) überwachte Zeitdauer, innerhalb derer das erste Schaltelement (19) einen elektrischen Strom begrenzt, ist.

6. Sicherungsmodul (9,37) gemäß Anspruch 4 oder 5,
wobei die Steuereinheit (20) dazu ausgebildet ist, die die Absicherung betreffende Information von dem Feldbusteilnehmer (8) zu empfangen,
wobei die die Absicherung des ersten Versorgungsausgangs (81) betreffende Information ein vorgegebener Wertebereich einer elektrischen Spannung, eines elektrischen Stroms, einer zeitlichen Entwicklung der elektrischen Spannung oder des elektrischen Stroms oder einer Zeitdauer, innerhalb derer das erste Schaltelement (19) einen elektrischen Strom begrenzt, ist.

7. Sicherungsmodul (9,37) gemäß einem der vorhergehenden Ansprüche,
aufweisend eine erste Isolationsvorrichtung (27),
wobei die erste Isolationsvorrichtung (27) in der Feldbusenergieanbindungsleitung (110) geschaltet ist, wodurch die Feldbusenergieanbindungsleitung (110) einen ersten Abschnitt (111) und einen zweiten Abschnitt (112) aufweist, wobei die erste Isolationsvorrichtung (27) dazu ausgebildet ist, den ersten Abschnitt (111) und den zweiten Abschnitt (112) der Feldbusenergieanbindungsleitung (110) galvanisch voneinander zu trennen.

8. Sicherungsmodul (9,37) gemäß einem der vorhergehenden Ansprüche,
aufweisend eine zweite Isolationsvorrichtung (28),
wobei die zweite Isolationsvorrichtung (28) in der Datenleitung (24) geschaltet ist, wodurch die Datenleitung (24) einen ersten Abschnitt (241) und einen zweiten Abschnitt (242) aufweist,
wobei die zweite Isolationsvorrichtung (28) dazu ausgebildet ist, den ersten Abschnitt (241) und den zweiten Abschnitt (242) der Datenleitung (24) galvanisch voneinander zu trennen.

9. Sicherungsmodul (33,37) gemäß einem der vorhergehenden Ansprüche,
mit einem zum Weiterleiten der abgesicherten Versorgungsenergie an einen weiteren Verbraucher (35) ausgebildeten zweiten Versorgungsausgang (82) und einem zum elektrischen Verbinden oder zum elektrischen Trennen des Versorgungseingangs (80) und des zweiten Versorgungsausgangs (82) ausgebildeten zweiten Schaltelement (34),
wobei das zweite Schaltelement (34) mit der Steuereinheit (20) verbunden ist und das erste Schaltelement (19) und das zweite Schaltelement (34) unabhängig voneinander von der Steuereinheit (20) ansteuerbar sind,
wobei die Steuereinheit (20) dazu ausgebildet ist, das Weiterleiten der Versorgungsenergie als abgesicherte Versorgungsenergie über den zweiten Versorgungsausgang (82) durch ein Ansteuern des zweiten Schaltelements (34) abzusichern,
wobei die Steuereinheit (20) dazu ausgebildet ist, im Rahmen der Absicherung des zweiten Versorgungsausgangs (82) einen weiteren Parameter der Versorgungsenergie und/oder einen weiteren Parameter der abgesicherten Versorgungsenergie mittels einer mit der Steuereinheit (20) verbundenen zweiten Erfassungseinrichtung (36) zu überwachen,
wobei die Steuereinheit (20) dazu ausgebildet ist, den Versorgungseingang (80) und den zweiten Versorgungsausgang (82) im Rahmen der Absicherung mittels des zweiten Schaltelements (34) elektrisch voneinander zu trennen, sobald der weitere überwachte Parameter außerhalb eines weiteren vorgegebenen Wertebereichs liegt,
wobei die Steuereinheit (20) dazu ausgebildet ist, eine die Absicherung des zweiten Versorgungsausgangs (82) betreffende Information mittels der Feldbusdaten über die Anschalteinheit (12) mit dem Feldbusteilnehmer (8) auszutauschen.

10. Sicherungsmodul (9,33,37) gemäß einem der vorhergehenden Ansprüche,
wobei die Anschalteinheit (12), die Steuereinheit (20), das erste Schaltelement (19) und das Versorgungsmodul (26) in einem gemeinsamen Gehäuse (42) angeordnet sind.

11. Sicherungsmodul (9,33,37) gemäß Anspruch 10,
wobei das Gehäuse (42) eine Seitenfläche (46) aufweist,
wobei die Seitenfläche (46) dazu ausgebildet ist, unmittelbar an einer weiteren Seitenfläche (47) eines weiteren Gehäuses (44) eines zur Anbindung des Verbrauchers (3) an das Feldbussystem (7) ausgebildeten Signalmoduls (10) anzuliegen,
wobei der erste Versorgungsausgang (81) an der Seitenfläche (46) als Kontaktstruktur (48) ausgebildet ist,
wobei die Kontaktstruktur (48) dazu ausgebildet ist, zur Weiterleitung der abgesicherten Versorgungsenergie unmittelbar an einem an der weiteren Seitenfläche (47) als weitere Kontaktstruktur (49) ausgebildeten weiteren Versorgungseingang (85) des Signalmoduls (10) anzuliegen und die weitere Kontaktstruktur elektrisch zu kontaktieren, wodurch das Sicherungsmodul (9,33,37) unmittelbar an das Signalmodul (10) anreihbar ist.

12. Sicherungsmodul (9,33,37) gemäß einem der Ansprüche 10 und 11,
wobei das Gehäuse (42) eine quer zur Seitenfläche (46) ausgebildete Frontseite (51) aufweist,
wobei der zweite Versorgungsausgang (82) zur Weiterleitung der abgesicherten Versorgungsenergie an den weiteren Verbraucher (35) als ein von der Frontseite (51) zur elektrischen Kontaktierung zugängliches Kontaktelement (52) ausgebildet ist.

13. Feldbussystem (7)
mit einem Feldbusteilnehmer (8), einem als weiteren Feldbusteilnehmer des Feldbussystems (7) ausgebildeten Sicherungsmodul (9,33,37) gemäß einem der vorhergehenden Ansprüche und einem als weiteren Feldbusteilnehmer des Feldbussystems (7) ausgebildeten Signalmodul (10) zum Anschluss eines Verbrauchers (3) an das Feldbussystem (7),
wobei der Feldbusteilnehmer (8), das Sicherungsmodul (9,33,37) und das Signalmodul (10) über einen Feldbus (11) miteinander verbunden sind,
wobei die Anschalteinheit (12) des Sicherungsmoduls (9,33,37) an den Feldbusteilnehmer (8) mittels des Feldbusses (11) angebunden ist, wodurch ein Austausch von Feldbusdaten zwischen der Steuereinheit (20) des Sicherungsmoduls (9, 33, 37) und dem Feldbusteilnehmer (8) ermöglicht wird,
wobei das Signalmodul (10) eine weitere Steuereinheit (22) und eine weitere Anschalteinheit (13) aufweist,
wobei die weitere Anschalteinheit (13) über eine weitere Datenleitung (25) mit der weiteren Steuereinheit (22) verbunden und zur Anbindung des Signalmoduls (10) an den Feldbusteilnehmer (8) mittels des Feldbusses (11) ausgebildet ist, wodurch ein Austausch von Feldbusdaten zwischen der weiteren Steuereinheit (22) und dem Feldbusteilnehmer (8) ermöglicht wird,
wobei die weitere Steuereinheit (22) zur Anbindung des Verbrauchers (3) an das Feldbussystem (7) ausgebildet ist, wobei das Signalmodul (10) einen zur Einspeisung der abgesicherten Versorgungsenergie ausgebildeten weiteren Versorgungseingang (85) und einen zum Weiterleiten der abgesicherten Versorgungsenergie an den Verbraucher (3) ausgebildeten weiteren Versorgungsausgang (86) aufweist,
wobei der erste Versorgungsausgang (81) und der weitere Versorgungseingang (85) elektrisch miteinander verbunden sind.

14. Feldbussystem gemäß Anspruch 13,
wobei die Anschalteinheit (12), die Steuereinheit (20), das erste Schaltelement (19) und das Versorgungsmodul (26) in einem gemeinsamen Gehäuse (42) angeordnet sind,
wobei die weitere Anschalteinheit (13), die weitere Steuereinheit (22) und ein weiteres Schaltelement (23) zum Ansteuern des Verbrauchers (3) mittels der weiteren Steuereinheit (22) in einem weiteren Gehäuse (44) angeordnet sind,
wobei das Gehäuse (42) eine Seitenfläche (46) aufweist, wobei die Seitenfläche (46) unmittelbar an einer weiteren Seitenfläche (47) des weiteren Gehäuses (44) des Signalmoduls (10) anliegt,
wobei der erste Versorgungsausgang (81) an der Seitenfläche (46) als Kontaktstruktur (48) ausgebildet ist,
wobei die Kontaktstruktur (48) zur Weiterleitung der abgesicherten Versorgungsenergie unmittelbar an einem an der weiteren Seitenfläche (47) als weitere Kontaktstruktur (49) ausgebildeten weiteren Versorgungseingang (85) des Signalmoduls (10) anliegt, wodurch das Sicherungsmodul (9,33,37) unmittelbar an das Signalmodul (10) angereiht ist.

## Claims

1. Protection module (9, 37) for a fieldbus system (7) having an interface unit (12), a control unit (20), a supply input (80), which is designed for feeding a supply energy into the protection module (9, 37), a first supply output (81), which is designed for forwarding the supply energy to a load (3) as a protected supply energy, a first switching element (19), which is designed to electrically connect or to electrically disconnect the supply input (80) and the first supply output (81), and a supply module (26), which is designed to provide an operating energy via an operating energy supply line (92) for operation of the control unit (20),
wherein a fieldbus energy input (5) is designed for feeding a fieldbus energy into the protection module (9, 37) for operation of the interface unit (12),
wherein the interface unit (12) is connected to the control unit (20) by a data line (24) and is designed to connect the protection module (9, 37) to a fieldbus subscriber (8) by means of a fieldbus (11), as a result of which it is possible for fieldbus data to be interchanged between the control unit (20) and the fieldbus subscriber (8), and
wherein the control unit (20) is connected to the first switching element (19) and is designed to protect the forwarding of the supply energy as protected supply energy via the first supply output (81) by controlling the first switching element (19),
**characterized in that**
the supply module (26) is electrically connected to the supply input (80) by means of a supply line (18) and a supply connecting line (181) and to the fieldbus energy input (5) by means of a fieldbus energy line (15) and a fieldbus energy connecting line (110),
wherein the supply module (26) is designed to generate the operating energy either from the supply energy or from the fieldbus energy.

2. Protection module (9, 37) according to Claim 1, wherein the supply module (26) is designed to generate the operating energy from the fieldbus energy if the supply energy is outside a specified range of supply energy values.

3. Protection module (9, 37) according to Claim 1 or 2,
wherein the control unit (20) is designed, for the purposes of protection of the first supply output (81), to monitor a parameter of the supply energy and/or a parameter of the protected supply energy by means of a first detection device (21), which is connected to the control unit (20),
wherein the control unit (20) is designed to electrically disconnect the supply input (80) and the first supply output (81) from one another by means of the first switching element (19) for the purposes of protection as soon as the monitored parameter is outside a specified range of values.

4. Protection module (9, 37) according to one of the preceding claims,
wherein the control unit (20) is designed to interchange an item of information relating to the protection of the first supply output (81) with the fieldbus subscriber (8) via the interface unit (12) by means of the fieldbus data.

5. Protection module (9, 37) according to Claim 4,
wherein the control unit (20) is designed to transmit the item of information relating to the protection to the fieldbus subscriber (8),
wherein the item of information relating to the protection of the first supply output (81) is a voltage detected by the first detection device (21), a detected electric current, a detected trend in the voltage or in the electric current over time, a detected switching state of the first switching element (19) or a time period, monitored by the control unit (20), within which the first switching element (19) limits an electric current.

6. Protection module (9, 37) according to Claim 4 or 5,
wherein the control unit (20) is designed to receive the item of information relating to the protection from the fieldbus subscriber (8),
wherein the item of information relating to the protection of the first supply output (81) is a specified range of values for a voltage, an electric current, a trend in the voltage or in the electric current over time or a time period within which the first switching element (19) limits an electric current.

7. Protection module (9, 37) according to one of the preceding claims,
having a first isolation apparatus (27),
wherein the first isolation apparatus (27) is connected in the fieldbus energy connecting line (110), as a result of which the fieldbus energy connecting line (110) has a first section (111) and a second section (112),
wherein the first isolation apparatus (27) is designed to electrically isolate the first section (111) and the second section (112) of the fieldbus energy connecting line (110) from one another.

8. Protection module (9, 37) according to one of the preceding claims,
having a second isolation apparatus (28),
wherein the second isolation apparatus (28) is connected in the data line (24), as a result of which the data line (24) has a first section (241) and a second section (242),
wherein the second isolation apparatus (28) is designed to electrically isolate the first section (241) and the second section (242) of the data line (24) from one another.

9. Protection module (33, 37) according to one of the preceding claims,
having a second supply output (82), which is designed for forwarding the protected supply energy to a further load (35), and a second switching element (34), which is designed to electrically connect or to electrically disconnect the supply input (80) and the second supply output (82),
wherein the second switching element (34) is connected to the control unit (20), and the first switching element (19) and the second switching element (34) can be controlled independently of one another by the control unit (20),
wherein the control unit (20) is designed to protect the forwarding of the supply energy as protected supply energy via the second supply output (82) by controlling the second switching element (34),
wherein the control unit (20) is designed, for the purposes of protection of the second supply output (82), to monitor a further parameter of the supply energy and/or a further parameter of the protected supply energy by means of a second detection device (36), which is connected to the control unit (20),
wherein the control unit (20) is designed to electrically disconnect the supply input (80) and the second supply output (82) from one another by means of the second switching element (34) for the purposes of protection as soon as the further monitored parameter is outside a further specified range of values,
wherein the control unit (20) is designed to interchange an item of information relating to the protection of the second supply output (82) with the fieldbus subscriber (8) via the interface unit (12) by means of the fieldbus data.

10. Protection module (9, 33, 37) according to one of the preceding claims,
wherein the interface unit (12), the control unit (20), the first switching element (19) and the supply module (26) are arranged in a common housing (42).

11. Protection module (9, 33, 37) according to Claim 10,
wherein the housing (42) has a lateral face (46),
wherein the lateral face (46) is designed to lie directly against a further lateral face (47) of a further housing (44) of a signal module (10), which is designed to connect the load (3) to the fieldbus system (7),
wherein the first supply output (81) is designed as a contact structure (48) on the lateral face (46),
wherein the contact structure (48) is designed to lie directly against a further supply input (85) of the signal module (10), which further supply input is designed as a further contact structure (49) on the further lateral face (47), for the purpose of forwarding the protected supply energy and to make electrical contact with the further contact structure, as a result of which the protection module (9, 33, 37) can be directly strung together with the signal module (10).

12. Protection module (9, 33, 37) according to either of Claims 10 and 11,
wherein the housing (42) has a front side (51), which is designed to be perpendicular to the lateral face (46),
wherein the second supply output (82) for forwarding the protected supply energy to the further load (35) is designed as a contact element (52) that is accessible from the front side (51) for the purpose of making electrical contact.

13. Fieldbus system (7)
having a fieldbus subscriber (8), a protection module (9, 33, 37) according to one of the preceding claims, which is designed as a further fieldbus subscriber of the fieldbus system (7), and a signal module (10), which is designed as a further fieldbus subscriber of the fieldbus system (7), for connecting a load (3) to the fieldbus system (7),
wherein the fieldbus subscriber (8), the protection module (9, 33, 37) and the signal module (10) are connected to one another by a fieldbus (11),
wherein the interface unit (12) of the protection module (9, 33, 37) is connected to the fieldbus subscriber (8) by means of the fieldbus (11), as a result of which it is possible for fieldbus data to be interchanged between the control unit (20) of the protection module (9, 33, 37) and the fieldbus subscriber (8),
wherein the signal module (10) has a further control unit (22) and a further interface unit (13),
wherein the further interface unit (13) is connected to the further control unit (22) by a further data line (25) and is designed to connect the signal module (10) to the fieldbus subscriber (8) by means of the fieldbus (11), as a result of which it is possible for fieldbus data to be interchanged between the further control unit (22) and the fieldbus subscriber (8),
wherein the further control unit (22) is designed to connect the load (3) to the fieldbus system (7),
wherein the signal module (10) has a further supply input (85), which is designed for feeding in the protected supply energy, and a further supply output (86), which is designed for forwarding the protected supply energy to the load (3),
wherein the first supply output (81) and the further supply input (85) are electrically connected to one another.

14. Fieldbus system according to Claim 13,
wherein the interface unit (12), the control unit (20), the first switching element (19) and the supply module (26) are arranged in a common housing (42),
wherein the further interface unit (13), the further control unit (22) and a further switching element (23) for controlling the load (3) by means of the further control unit (22) are arranged in a further housing (44),
wherein the housing (42) has a lateral face (46),
wherein the lateral face (46) lies directly against a further lateral face (47) of the further housing (44) of the signal module (10),
wherein the first supply output (81) is designed as a contact structure (48) on the lateral face (46),
wherein the contact structure (48) lies directly against a further supply input (85) of the signal module (10), which further supply input is designed as a further contact structure (49) on the further lateral face (47), for the purpose of forwarding the protected supply energy, as a result of which the protection module (9, 33, 37) is directly strung together with the signal module (10).

## Revendications

1. Module de protection (9, 37) pour un système de bus de terrain (7), comprenant une unité de branchement (12), une unité de commande (20), une entrée d'alimentation (80) réalisée pour injecter une énergie d'alimentation dans le module de protection (9, 37), une première sortie d'alimentation (81) réalisée pour retransmettre à un récepteur (3) l'énergie d'alimentation sous la forme d'une énergie d'alimentation protégée, un premier élément de commutation (19) réalisé pour relier électriquement ou pour séparer électriquement l'entrée d'alimentation (80) et la première sortie d'alimentation (81), et un module d'alimentation (26) réalisé pour fournir une énergie de fonctionnement par une ligne d'alimentation en énergie de fonctionnement (92) pour un fonctionnement de l'unité de commande (20),
dans lequel une entrée d'énergie de bus de terrain (5) est réalisée pour injecter une énergie de bus de terrain dans le module de protection (9, 37) pour le fonctionnement de l'unité de branchement (12),
l'unité de branchement (12) étant reliée à l'unité de commande (20) par une ligne de données (24) et étant réalisée pour rattacher le module de protection (9, 37) à un utilisateur de bus de terrain (8) au moyen d'un bus de terrain (11) de façon à permettre un échange de données de bus de terrain entre l'unité de commande (20) et l'utilisateur de bus de terrain (8), et
l'unité de commande (20) étant reliée au premier élément de commutation (19) et réalisée pour protéger la retransmission de l'énergie d'alimentation sous la forme d'une énergie d'alimentation protégée par l'intermédiaire de la première sortie d'alimentation (81) en pilotant le premier élément de commutation (19),
**caractérisé en ce que** le module d'alimentation (26) est relié électriquement à l'entrée d'alimentation (80) au moyen d'une ligne d'alimentation (18) et d'une ligne de raccordement d'alimentation (181) et à l'entrée d'énergie de bus de terrain (5) au moyen d'une ligne d'énergie de bus de terrain (15) et d'une ligne de raccordement d'énergie de bus de terrain (110),
le module d'alimentation (26) étant réalisé pour générer l'énergie de fonctionnement soit à partir de l'énergie d'alimentation, soit à partir de l'énergie de bus de terrain.

2. Module de protection (9, 37) selon la revendication 1,
dans lequel le module d'alimentation (26) est réalisé pour générer l'énergie de fonctionnement à partir de l'énergie de bus de terrain si l'énergie d'alimentation est située en dehors d'une plage de valeurs d'énergie d'alimentation prédéfinie.

3. Module de protection (9, 37) selon la revendication 1 ou 2,
dans lequel l'unité de commande (20) est réalisée, dans le cadre de la protection de la première sortie d'alimentation (81), pour surveiller un paramètre de l'énergie d'alimentation et/ou un paramètre de l'énergie d'alimentation protégée au moyen d'un premier dispositif de détection (21) relié à l'unité de commande (20),
dans lequel l'unité de commande (20) est réalisée pour séparer électriquement l'une de l'autre l'entrée d'alimentation (80) et la première sortie d'alimentation (81) dans le cadre de la protection au moyen du premier élément de commutation (19) dès que le paramètre surveillé est situé en dehors d'une plage de valeurs prédéfinie.

4. Module de protection (9, 37) selon l'une quelconque des revendications précédentes,
dans lequel l'unité de commande (20) est réalisée pour échanger avec un utilisateur de bus de terrain (8) une information concernant la protection de la première sortie d'alimentation (81) au moyen des données de bus de terrain par l'intermédiaire de l'unité de branchement (12).

5. Module de protection (9, 37) selon la revendication 4,
dans lequel l'unité de commande (20) est réalisée pour transmettre à l'utilisateur de bus de terrain (8) l'information concernant la protection,
dans lequel l'information concernant la protection de la première sortie d'alimentation (81) est une tension électrique détectée par le premier dispositif de détection (21), un courant électrique détecté, une évolution dans le temps détectée de la tension électrique ou du courant électrique, un état de commutation détecté du premier élément de commutation (19) ou une durée surveillée par l'unité de commande (20) dans laquelle le premier élément de commutation (19) limite un courant électrique.

6. Module de protection (9, 37) selon la revendication 4 ou 5,
dans lequel l'unité de commande (20) est réalisée pour recevoir de l'utilisateur de bus de terrain (8) l'information concernant la protection,
dans lequel l'information concernant la protection de la première sortie d'alimentation (81) est une plage de valeurs prédéfinie d'une tension électrique, d'un courant électrique, d'une évolution dans le temps de la tension électrique ou du courant électrique ou une durée dans laquelle le premier élément de commutation (19) limite un courant électrique.

7. Module de protection (9, 37) selon l'une quelconque des revendications précédentes,
présentant un premier dispositif d'isolation (27),
dans lequel le premier dispositif d'isolation (27) est connecté dans la ligne de raccordement d'énergie de bus de terrain (110), de sorte que la ligne de raccordement d'énergie de bus de terrain (110) présente une première partie (111) et une deuxième partie (112),
dans lequel le premier dispositif d'isolation (27) est réalisé pour séparer galvaniquement l'une de l'autre la première partie (111) et la deuxième partie (112) de la ligne de raccordement d'énergie de bus de terrain (110).

8. Module de protection (9, 37) selon l'une quelconque des revendications précédentes,
présentant un deuxième dispositif d'isolation (28),
dans lequel le deuxième dispositif d'isolation (28) est connecté dans la ligne de données (24), de sorte que la ligne de données (24) présente une première partie (241) et une deuxième partie (242),
dans lequel le deuxième dispositif d'isolation (28) est réalisé pour séparer galvaniquement l'une de l'autre la première partie (241) et la deuxième partie (242) de la ligne de données (24).

9. Module de protection (33, 37) selon l'une quelconque des revendications précédentes,
comprenant une deuxième sortie d'alimentation (82) réalisée pour retransmettre l'énergie d'alimentation protégée à un autre récepteur (35) et un deuxième élément de commutation (34) réalisé pour relier électriquement ou pour séparer électriquement l'entrée d'alimentation (80) et la deuxième sortie d'alimentation (82),
le deuxième élément de commutation (34) étant relié à l'unité de commande (20), et le premier élément de commutation (19) et le deuxième élément de commutation (34) pouvant être pilotés indépendamment l'un de l'autre par l'unité de commande (20),
l'unité de commande (20) étant réalisée pour protéger la retransmission de l'énergie d'alimentation sous la forme d'une énergie d'alimentation protégée par l'intermédiaire de la deuxième sortie d'alimentation (82) en pilotant le deuxième élément de commutation (34),
l'unité de commande (20) étant réalisée, dans le cadre de la protection de la deuxième sortie d'alimentation (82), pour surveiller un autre paramètre de l'énergie d'alimentation et/ou un autre paramètre de l'énergie d'alimentation protégée au moyen d'un deuxième dispositif de détection (36) relié à l'unité de commande (20),
l'unité de commande (20) étant réalisée pour séparer électriquement l'une de l'autre l'entrée d'alimentation (80) et la deuxième sortie d'alimentation (82) dans le cadre de la protection au moyen du deuxième élément de commutation (34), dès que l'autre paramètre surveillé est situé en dehors d'une autre plage de valeurs prédéfinie,
l'unité de commande (20) étant réalisée pour échanger avec l'utilisateur de bus de terrain (8) une information concernant la protection de la deuxième sortie d'alimentation (82) au moyen des données de bus de terrain par l'intermédiaire de l'unité de branchement (12).

10. Module de protection (9, 33, 37) selon l'une quelconque des revendications précédentes, dans lequel l'unité de branchement (12),
dans lequel l'unité de commande (20), le premier élément de commutation (19) et le module d'alimentation (26) sont disposés dans un boîtier commun (42).

11. Module de protection (9, 33, 37) selon la revendication 10,
dans lequel le boîtier (42) présente une surface latérale (46), la surface latérale (46) étant réalisée pour être directement adjacente à une autre surface latérale (47) d'un autre boîtier (44) d'un module de signal (10) réalisé pour raccorder le récepteur (3) au système de bus de terrain (7),
dans lequel la première sortie d'alimentation (81) est réalisée sur la surface latérale (46) sous la forme d'une structure de contact (48),
dans lequel la structure de contact (48) est réalisée pour retransmettre l'énergie d'alimentation protégée directement au niveau d'une autre entrée d'alimentation (85) du module de signal (10), réalisée sous la forme d'une autre structure de contact (49) sur l'autre surface latérale (47), et pour entrer en contact électrique avec l'autre structure de contact, de sorte que le module de protection (9, 33, 37) peut être juxtaposé directement au module de signal (10).

12. Module de protection (9, 33, 37) selon l'une quelconque des revendications 10 et 11,
dans lequel le boîtier (42) présente une face frontale (51) réalisée transversalement à la surface latérale (46),
dans lequel la deuxième sortie d'alimentation (82) est réalisée pour retransmettre l'énergie d'alimentation protégée à l'autre récepteur (35) sous la forme d'un élément de contact (52) accessible par la face frontale (51) pour la mise en contact électrique.

13. Système de bus de terrain (7),
comprenant un utilisateur de bus de terrain (8), un module de protection (9, 33, 37) selon l'une quelconque des revendications précédentes, réalisé sous la forme d'un autre utilisateur de bus de terrain du système de bus de terrain (7), et un module de signal (10), réalisé sous la forme d'un autre utilisateur de bus de terrain du système de bus de terrain (7), pour la connexion d'un récepteur (3) au système de bus de terrain (7),
dans lequel l'utilisateur de bus de terrain (8), le module de protection (9, 33, 37) et le module de signal (10) sont reliés les uns aux autres par un bus de terrain (11),
dans lequel l'unité de branchement (12) du module de protection (9, 33, 37) est raccordée à l'utilisateur de bus de terrain (8) au moyen du bus de terrain (11) de façon à permettre un échange de données de bus de terrain entre l'unité de commande (20) du module de protection (9, 33, 37) et l'utilisateur de bus de terrain (8),
dans lequel le module de signal (10) présente une autre unité de commande (22) et une autre unité de branchement (13),
dans lequel l'autre unité de branchement (13) est reliée à l'autre unité de commande (22) par une autre ligne de données (25) et est réalisée pour raccorder le module de signal (10) à l'utilisateur de bus de terrain (8) au moyen du bus de terrain (11), de façon à permettre un échange de données de bus de terrain entre l'autre unité de commande (22) et l'utilisateur de bus de terrain (8),
dans lequel l'autre unité de commande (22) est réalisée pour raccorder le récepteur (3) au système de bus de terrain (7),
dans lequel le module de signal (10) présente une autre entrée d'alimentation (85) réalisée pour injecter de l'énergie d'alimentation protégée et une autre sortie d'alimentation (86) réalisée pour retransmettre l'énergie d'alimentation protégée au récepteur (3),
dans lequel la première sortie d'alimentation (81) et l'autre entrée d'alimentation (85) sont reliées électriquement l'une à l'autre.

14. Système de bus de terrain selon la revendication 13,
dans lequel l'unité de branchement (12), l'unité de commande (20), le premier élément de commutation (19) et le module d'alimentation (26) sont disposés dans un boîtier (42) commun,
dans lequel l'autre unité de branchement (13), l'autre unité de commande (22) et un autre élément de commutation (23) sont disposés dans un autre boîtier (44) pour piloter le récepteur (3) au moyen de l'autre unité de commande (22),
dans lequel le boîtier (42) présente une surface latérale (46), la surface latérale (46) étant directement adjacente à une autre surface latérale (47) de l'autre boîtier (44) du module de signal (10),
la première sortie d'alimentation (81) étant réalisée sur la surface latérale (46) sous la forme d'une structure de contact (48),
la structure de contact (48) étant directement adjacente à une autre entrée d'alimentation (85) du module de signal (10), réalisée sur l'autre surface latérale (47) sous la forme d'une autre structure de contact (49), pour retransmettre l'énergie d'alimentation protégée, de sorte que le module de protection (9, 33, 37) est juxtaposé directement au module de signal (10).
